(19) Europäisches Patentamt
European Patent Office
Office européen des brevets

(11) **EP 3 909 803 A1**

(12) **EUROPEAN PATENT APPLICATION**
published in accordance with Art. 153(4) EPC

(43) Date of publication:
**17.11.2021 Bulletin 2021/46**

(51) Int Cl.:
**B60L 7/18** (2006.01)      **B60W 20/12** (2016.01)
**B60W 20/14** (2016.01)

(21) Application number: **19908316.3**

(22) Date of filing: **30.12.2019**

(86) International application number:
**PCT/CN2019/129964**

(87) International publication number:
**WO 2020/143495 (16.07.2020 Gazette 2020/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.01.2019 CN 201910026280**

(71) Applicants:
• **LCB International Inc.
Tortola, VG1110 (VG)**

• **Gesang, Wangjie
Shanghai 201603 (CN)**
• **Cha, Wei
Shanghai 201603 (CN)**

(72) Inventors:
• **GESANG, Wangjie
Shanghai 201603 (CN)**
• **CHA, Wei
Shanghai 201603 (CN)**

(74) Representative: **Murgitroyd & Company
Murgitroyd House
165-169 Scotland Street
Glasgow G5 8PL (GB)**

(54) **REGENERATIVE BRAKE AND RETARDING SYSTEM FOR HYBRID COMMERCIAL VEHICLE**

(57) The invention provides a brake assist and retarder system for hybrid commercial vehicles. The system is mainly specific to the application scenarios of long-distance transport for large commercial vehicles (trucks or buses). According to the vehicle-mounted three-dimensional electronic map, the three-dimensional positioning data of the vehicle measured by the navigator, and data such as relative speed and absolute distance between the vehicle and the vehicle ahead in the same lane measured by the forward looking millimeter wave radar, the electrical power split device is commanded through the vehicle control unit to allocate the flow direction and amplitude of 100 kW-class electric power accurately, continuously and dynamically among the generator set, the power battery pack and the driving motor with response time scale of 10ms, and meet the transient power balance of road load required by the vehicle dynamics equation in real time; achieve vehicle energy saving and emission reduction through predictive adaptive cruise control and fuel saving AI algorithms, reduce drivers' labor intensity of long-distance driving, realize the functions of emergency brake assist and retarding when the vehicle is going down a long slope, and improve the vehicle driving safety.

Figure 2

**EP 3 909 803 A1**

**Description**

<u>Field</u>

The invention relates to a regenerative braking and retarding system device and a control method for large hybrid commercial vehicles, in particular to heavy duty trucks, which realize adaptive cruise control, forward collision warning, emergency braking assistance, long-downhill non-friction retarding and other vehicle functions based on AI predictive vehicle power control in the application scenarios of long haul logistics centered on long-distance expressway running to achieve the beneficial effects of improvement in the active safety of vehicle running, driving ease, fuel saving and emission reduction.

<u>Background</u>

At present, the mandatory regulations of Europe and America on emissions from large commercial vehicles including highway heavy duty trucks ("heavy duty trucks"for short, witha gross weight of more than 15 tons) have turned to the emerging emission regulations focusing on reducing carbon emissions of greenhouse gas, giving priority to carbon dioxide ($CO_2$), from the regulations (Euro VI, fully implemented in Europe, 2014) focusing on reducing exhaust pollutant emissions and EPA2010 (fully implemented in America, 2010). The carbon emission (g/km) of the vehicle is proportional to the fuel consumption (L/100 km) of the vehicle, and reducing carbon emissions is equivalent to reducing fuel consumption (or improving fuel economy, in mile/gallon). The regulations on greenhouse gas from medium duty/heavy duty engines and commercial vehicles (GHG Phase II) issued by the American Federal Government in 2016 explicitly specify the detailed standards for fuel economy (mile/gallon) of all new medium duty/heavy duty engines and commercial vehicles sold in America is improved year by year and the fuel consumption (L/100 km) and carbon emissions (g/ton-km) are reduced by 2021-2027 on the premise of maintaining the limits for pollutant and exhaust emissions in EPA2010 unchanged. In November 2018, the European Parliament voted to approve the first European mandatory regulations on carbon emissions from heavy duty trucks (i.e. Euro VII). The regulations require that the carbon emissions (g $CO_2$/km) from new heavy duty trucks in Europe will be reduced by 20% by 2025 and the carbon emissions from new heavy duty trucks will be reduced by 35% by 2030 with heavy duty diesel trucks in 2019 as a benchmark. China began to implement the China V mandatory regulations on emissions from large commercial vehicles in 2017, and will implement the China VI mandatory regulations on emissions nationwide by July 2021. The China VI vehicle emission standards are basically the same as Euro VI and EPA2010 in the aspect of limits for emissions of exhaust pollutants, and some limits are even more strict. Emission regulations are the main driving force of vehicle powertrain technology development all over the world. The powertrain of heavy duty trucks that meet the China VI vehicle emission standards will be at the same technical platform level as that of North America and Europe for the first time in history. Based on the historical experience in the past 20 years that all the regulations China I to VI are formulated and promulgated by reference to regulations Euro I to VI, China will quickly follow the EU and introduce the China VII regulations focusing on carbon emission intensity and fuel consumption of heavy duty trucks. After 2020, the regulations and industry focus of China, America and European Union as the three major heavy duty truck markets in the world will be turned to reduction of fuel consumption and carbon emissions from reduction of exhaust pollutant emissions. The average fuel cost of a heavy duty truck for long haul logistics is approximately USD 60 thousands per year in America, and approximately RMB 400 thousands in China and Europe. The fuel consumption and emissions of the heavy duty trucks are reduced through technical innovation, which is of great significance to OEMs, drivers, fleets, shippers, governments, societies and other stakeholders.

America leads the world in the development of the regulations and technologies on emissions from the heavy duty trucks and reduction of fuel consumption. As a part of the Super Truck project led and subsidized by the United States Department of Energy, four teams led by major heavy duty truck OEMs in North America created four super heavy duty truckprototypes through five years of research and development, and achieved the goal of improving the fuel economy (gallon/ton-mile) by 50% for freight heavy duty trucks by the end of 2016 compared with 2009.

The Super Truck project of America integrates various energy-saving and emission reduction technologies which may be subjected to commercial mass production before 2025. The future main challenge is to improve the comprehensive cost effectiveness of implementation of various energy-saving technologies. At present, the medium and long-term challenges in the U.S. heavy duty truck industry are how to achieve the mandatory requirements for 2027 heavy duty truck fuel consumption of GHG Phase II on the premise of controlling the price rise of new heavy duty trucks effectively. The stakeholders of the heavy duty truck industry in China need to face the severe test that the retail prices of new heavy duty trucks meeting the requirements of the Limits and Measurement Methods for Emissions from Light-duty Vehicles (China VI) in 2020 are estimated to rise greatly compared with the selling price of current heavy duty trucks meeting the requirements of the Limits and Measurement Methods for Emissions from Light-duty Vehicles (China V).

In last ten years, in the world's major automobile markets, especially the world's largest Chinese automobile market, there are successful cases of mass commercial use of electric or hybrid passenger vehicles and large buses heavily subsidized by the government. However, on the Chinese/American/European Union's markets of the largest, most technologically advanced heavy duty truck for long haul logistics, domestic and foreign industry experts agreed that the mass commercial use of electric heavy duty trucks or hybrid heavy duty trucks for long haul logistics cannot be achieved without subsidies before 2030. Refer to Ricardo (2017), "Heavy Duty Vehicle Technology Potential and Cost Study", Final Report for ICCT for details.

Any fuel-saving technology of heavy duty trucks has the dual benefits of reducing vehicle exhaust pollutant emissions and greenhouse gas (or carbon) emissions. In addition to the two challenges of energy saving and emission reduction, there is also the most important driving safety for the long haul logistics of heavy duty trucks. The vast majority of traffic accidents occurring to heavy duty trucks are originated from distraction to drivers, fatigue driving, operation errors and other human factors. One of the main purposes of developing L3/L4 automatic driving commercial vehicles for long haul logistics is to eliminate human factors and improve driving safety. In order to meet the functional safety level requirements of vehicles, L3/L4 automatic driving commercial vehicles must be configured with redundant braking systems.

Summary of Invention

The energy of hybrid vehicle is effectively recovered by restricting the internal combustion engine to operate at the high efficiency area and regenerative braking of a driving motor to charge the battery pack under the urban or suburban conditions where the vehicles need to accelerate and apply brakes frequently at the average speed less than 60 km/h, which greatly reduces the overall fuel consumption compared with traditional internal combustion engine vehicles, with obvious energy saving and emission reduction effects and high cost effectiveness, thus having achieved the mass commercial use of the hybrid vehicles. For heavy duty trucksfor long haul logistics, however, the vast majority (more than 85%) of the running time or mileage within the product life cycle occurs under the expressway conditions, i.e. average speed above 60 km/h, and the acceleration and braking are not frequent. The internal combustion engines of traditional vehicles stably work at the high efficiency area for a long time under the expressway conditions, while the regenerative braking energy recovery function of the hybrid vehicles is useless; in addition, the hybrid vehicles have additional loss due to multiple energy conversion among chemical energy, mechanical energy, electric energy and mechanical energy, so there has been a "consensus" in the global automobile and road transportation industry for a long time that the drop of the overall fuel consumption of hybrid heavy duty trucksfor long haul logistics (hereinafter referred to as "hybrid heavy duty trucks") is limited compared with the traditional heavy duty diesel trucks, and it is unlikely that the largest drop of the overall fuel consumption exceeds 10%. According to the technical and industrial development status of current international/domestic three major powers (battery, motor and electronic control), compared with traditional heavy duty diesel trucks, the cost growth of hybrid heavy duty trucks is obvious, but the fuel saving effect is not obvious, and consequently the cost effectiveness of the hybrid heavy duty trucks is low. The current "consensus" of the global heavy duty truck industry considers that the mass commercial use of the hybrid heavy duty trucksfor long haul logistics cannot be achieved without subsidies in the global marketsof China, America and Europe, the three major heavy duty truck core markets, before 2030.

The highway freight industry faces another major challenge that the shortage of drivers and turnover rates are high throughout the year. For the same heavy duty trucks, loads and routes, drivers with different experiences and capabilities can result in the actual overall fuel consumption difference up to 25%. The actual fuel consumption of heavy duty trucks for long haul logistics varies from person to person, which is another major shortcoming of the industry. Lots of freight transport companies reduce the difference between the actual fuel consumption and the optimal fuel consumption, caused by human factors of drivers, though various methods, such as driver training, fuel-efficient rewards and punishments, sensors, big data analysis of driver's driving behavior and fuel saving guidance.

In order to achieve the mass commercial use of hybrid heavy duty trucks for long haul logistics as early as possible, it is necessary to greatly improve the cost effectiveness. The average selling price of the heavy duty diesel trucks for long haul logistics is three to ten times the price of common passenger vehicles with internal-combustion engines in America or China, but the annual fuel cost of the heavy duty diesel trucks for long haul logistics is 30 to 60 times the annual fuel cost of passenger vehicles with internal-combustion engines. The retail price of gasoline or diesel in America and China is far lower than the retail price of the gasoline or diesel in Europe, and the proportion of the price of passenger vehicles to heavy duty trucks and the annual fuel expense in Europe is similar to that in China and America. Two effective methods for improving the cost effectiveness of the heavy duty diesel trucks for long haul logistics are provided, one is to increase the fuel consumption drop compared with the fuel consumption of traditional diesel vehicles, and the other is to reduce the difference between the sum of the one-time purchase cost and the accumulated vehicle operation and maintenance cost of the heavy duty diesel trucks and that of the traditional diesel vehicles.

The "consensus" of global automobile industry experts (especially heavy duty truck industry experts) is originated from the subjective extension of the objective fact that the fuel saving effect of all hybrid passenger vehicles is not obvious under high-speed conditions, and it is concluded that the fuel saving effect of hybrid heavy duty trucks for long haul logistics is not obvious with historical limitations. They all ignore the secret source for reducing the fuel consumption of the hybrid heavy duty trucks for long haul logistics greatly, that is the time-varying function Pg(t) of grade power with amplitude of hundreds of kilowatts caused by small changes (1.0%) of the road longitudinal slope ("longitudinal slope" for short) and frequent opportunities for electric energy recovery of 100kW regenerative braking when heavy duty truck is running at high speed on a closed expressway.

The core of the invention is to disclose for the first time a new 100-kilowatt-class power electronic three-port network "ePSD - electrical Power Split Device" (also known as "electrical power diverter"). Through the effective integration of fuel-electric hybrid technology in coordination with satellite navigation (GNSS), 3D e-map, Internet of Things (IoT), Big Data, artificial intelligence (AI) and other emerging technologies, a new heavy duty truck species will be created: Automated-Connected-Electrified (ACE) heavy duty truck to realize multiple beneficial effects of energy saving, emission reduction and improvement of driving safety. The overall fuel consumption drop of ACE heavy duty trucks is up to above 30% compared with that of the traditional heavy duty diesel trucks in the application scenarios of long haul logistics on the premise of at least maintaining vehicle power, and it can also eliminate the industrial pain point that the actual comprehensive fuel consumption discreteness of the heavy duty truck due to "human factors" of drivers is up to 25%; moreover, ACE heavy duty trucks can significantly improve the braking performance, reduce the driver's labor intensity in long-distance driving, and improve the vehicle running safety, thus greatly improving the cost effectiveness of ACE heavy duty trucks. For the transport fleet, efficiency and safety are two eternal themes. It is estimated that the mass commercial use of ACE heavy duty trucks for long haul road logistics can be realized in the three major heavy duty truck markets ofAmerica, China and the European Union.

The first principle of the fuel-saving technology of the ACE heavy duty trucks for long haul logistics is the vehicle longitudinal dynamic equation that the automobile industry is very familiar with:

$$P_v = \frac{V}{1000\eta}\left(Mgf_r\cos\alpha + \frac{1}{2}\rho_a C_D A_f V^2 + Mg\sin\alpha + M\delta\frac{dV}{dt}\right)$$

Where, $P_v$ is the vehicle power or the road load power, and the unit of all power items is kilowatt (KW).

The rolling power $P_r$ refers to the required power for overcoming the tire rolling friction resistance when the vehicle runs, and the rolling power can be shown in the following formula (1):

$$P_r = \frac{V}{1000\eta}\left(Mgf_r\cos\alpha\right) \tag{1},$$

The air drag power $P_d$ refers to the required power for overcoming air resistance (calm weather) when the vehicle runs, and the air drag power can be shown in the following formula (2):

$$P_d = \frac{V}{1000\eta}\left(\frac{1}{2}\rho_a C_D A_f V^2\right) \tag{2},$$

The grade power $P_g$ refers to the required power for overcoming the gravity when the vehicle runs uphill, and the grade power of the vehicle running downhill is a negative value, representing the driving power generated by conversion between the potential energy and the kinetic energy of the vehicle; and the grade power $P_g$ can be shown in the following formula (3):

$$P_g = \frac{V}{1000\eta}\left(Mg\sin\alpha\right) \tag{3}$$

The acceleration power $P_a$ refers to the required additional power for the vehicle reaching the predetermined acceleration when running on a level road. When the acceleration is a negative value, it represents mechanical braking for converting the kinetic energy of the vehicle into thermal energy, or regenerative braking for converting part of the kinetic energy of the vehicle into the electric energy to be recycled. The acceleration power $P_a$ can be shown in the following formula (4):

$$P_a = \frac{V}{1000\eta}\left(M\delta\frac{dV}{dt}\right)$$

$$(4)$$

In the above formulas (1)-(4): V is the vehicle speed (m/s); $\eta$ is the drive train efficiency; M is the gross vehicle mass(kg); g is the acceleration of gravity, and is equal to 9.8 (m/s²); $f_r$ is the tire rolling friction coefficient; $\alpha$ is the highway longitudinal slope angle; the positive value represents upslope, and the negative value represents downslope; $\rho_a$ is air density (kg/m³); $C_D$ is the vehicle wind resistance coefficient; $A_f$ is the area (m²) in front of the vehicle; $\delta$ is the rolling mass conversion coefficient; dV/dt is the vehicle acceleration, and the positive value represents acceleration; and the negative value represents deceleration.

Braking or acceleration is seldom performed under the expressway running condition. When the vehicle basically runs at constant speed, the acceleration power is zero, the rolling power is basically unchanged on a highway section with a small longitudinal slope (i.e. the longitudinal slope within several degrees), the air drag power can be approximated to a constant, only the grade power is a time variable, and the change amplitude of the grade power is proportional to the slope change amplitude of the expressway section, vehicle speed and gross vehicle weight.

The gross weight of the heavy duty truck for long haul logistics in China is generally below 40 tons, the maximum statutory speed limit is 90 km/h, major highways in China are often jammed, and the average speed of the heavy duty trucks in the road logistics industry is about 60 km/h; the gross weight limit of the heavy duty truck for long haul logistics in America is 36 tons (80,000 pounds), the maximum statutory speed is up to 125 km/h, and the average running speed of the heavy duty trucks in the road logistics industry is higher than about 85 km/h. Most American transport companies limit the maximum speed of the heavy duty trucks to 105 km/h in view of fuel saving and safety mainly.

The" longitudinal slope" is short for the road longitudinal slope and there are two unit of measurement; one is the included angle between the road surface and the horizontal plane, and the other is the proportion of the road surface elevation to the horizontal projection distance of the road section, shown in %. Most countries limit the longitudinal slope within the range of -7.0%~+7.0% in highway design and construction, which is mainly based on consideration of ensuring that the full-load heavy duty truck runs on a highway safely and effectively.

For example, for a fully loaded heavy duty truck with the gross weight of 40 tons and the speed of 60 km/h, the required grade power is up to 228 KW when the vehicle encounters a small upslope, namely that the road longitudinal slope is 2.0 to overcome the universal gravitation in order to keep the vehicle going uphill at a constant speed, and at the moment, the sum of the rolling resistance power and the air drag power of the vehicle is only 71 KW. If the power margin of the vehicle powertrain is insufficient, the driver needs to shift gears and speeds down to continuously run uphill. Compared with a passenger vehicle with the gross weight of 2.0 tons, the grade power required for the vehicle going uphill at constant speed at the moment is only 11.4 KW, and the sum of the rolling resistance power and the air drag power is 3.6 KW; for passenger vehicles with the peak power of nearly 100 KW, the power margin is sufficient, there is no need to worry about this slope, and the vehicle runs as easily as walking on firm earth. In other words, for each loaded heavy duty truck running at high speed, every 1.0 degree change, which is hard to see by naked eyes, of the road longitudinal slope means that the road load power of the heavy duty truck originated from grade power changes has a great change of more than 100 KW.

According to the vehicle kinetic equation, the deceleration power (also known as braking power) required for braking is directly proportional to the total mass, speed and deceleration of the vehicle. When the vehicle is running at the speed of 60 km/h, the required braking power is 67 kW for passenger vehicles with the gross weight of 2.0 tons to realize moderate-intensity braking with the deceleration of 2 m/s² (i.e. 0.2g, g for the acceleration of gravity); however, for a heavy duty truck with the gross weight of 40 tons, the braking power required is as high as 1333 kW. Limited by the peak power values of the current onboard driving motor and the motor controller (power electronics), the peak regenerative braking power of hybrid vehicles to recover energy by regenerative braking is basically below 500 kW. However, the part of energy with braking power higher than 500 kW cannot be converted into electric energy for recovery by regenerative braking, so this part of vehicle kinetic energy can only be converted into heat energy by mechanical braking and totally wasted. At present, the commercialized DC fast charging pile with the maximum power in the world is the 375 kW charging pile.

Thus, under the mixed running conditions of a city or a suburb where the acceleration/deceleration is frequent, the fuel saving of the hybrid vehicles (light-duty vehicle or heavy-duty commercial vehicle) is more obvious than that of traditional internal combustion engine vehicles. Under the running conditions of closed highways with infrequent acceleration and deceleration, however, the traditional internal combustion engine can work stably in its high efficiency area for a long time, compared with the comprehensive fuel saving effect of the traditional internal combustion engine vehicle, the fuel saving effect of the hybrid vehicle is not obvious, the rate of fuel saving cannot be higher than 10%, and sometimes there is even a slight increase in fuel consumption. The above-mentioned "consensus"of the automobile industry is applicable for all hybrid passenger vehicles (with gross weight less than 3.5 tons) and parallel hybrid (a large engine plus a medium-sized motor with peak power less than 150 kW) large commercial vehicles. However, inventors find that the "consensus" of the industry which is not applicable for the series hybrid heavy duty trucks in the application scenario of long haul logistics is a technical bias. There is no fully horizontal expressway in the world, even the highways in plain regions are full of longitudinal slope distribution with changing amplitude at the level of 1.0 degree. Although a 1.0 degree road longitudinal slope is difficult to distinguish with naked eyes, longitudinal grade power of 100 KW can be generated for ACE heavy duty trucks. ACE heavy duty trucks can effectively take advantage of many opportunities of 100 KW level longitudinal grade power generated by the small downhill gravity along the road under expressway conditions, and recover electric energy through regenerative braking of the driving motor, which add up to achieve the beneficial effect of obvious energy saving and emission reduction.

In the recent ten years, for some medium and high-end heavy duty trucks with internal combustion engines in Europe and America, fuel has been saved through the predictive cruise control by using the vehicle-mounted three-dimensional map comprising the road longitudinal slope information. However, the predictive cruise of traditional heavy duty trucks has limitations and shortcomings: a pure mechanical power assembly is not applicable for large changing the output power of the internal combustion engine instantaneously (sub-second level), and the automatic transmission shifts gears frequently; the predictive cruise control is only applicable for steep slopes with the longitudinal slope angle of larger than 2.0 degrees and the slope length of above several kilometers; the traditional internal combustion engine vehicle has no regenerative braking function, the vehicle residual mechanical energy generated by the vehicle on the steep slopes cannot be recycled dynamically, and the overall fuel consumption drop in actual operation is less than 3.0%.

As mentioned above, there are nohighways in the worldthat are absolutely horizontal. Even in plain areas, most of longitudinal slopes between $\pm 3.0$ degrees are continuously distributed along meter-level road sections of the highways. For loaded heavy duty trucks running at constant speed under the highway conditions, the biggest impact on the time variable of the road load total power $P_v$ is the grade power$P_g$, and the change amplitude is up to $\pm$hundreds of kilowatts. The sum of the rolling resistance power $P_r$ and the air drag power$P_d$ is approximated as a constant. If there is a vehicle-mounted electronic navigation three-dimensional map on which the highway longitudinal meter-level interval density, the road positioning meter-level precision (longitude and latitude) and the longitudinal slope measurement accuracy up to 0.1 degree, by the aid of vehicle-mounted Internet of Things, the meter-level high-precision satellite navigation and inertial navigation and according to the vehicle kinetic equation, the vehicle control unit (VCU) can real-timely and accurately predict the road load variation of the vehicle within hundreds of kilometers, especially the 10-kilowatt precision time-varying function of the grade power$P_g(t)$ and the road load power $P_v(t)$ within the range of hundreds of kilometers of the electronic horizon in front of the vehicle. The predictive refresh frequency of the VCU can be up to 10.0 hertz (Hz), that is to say, the VCU can refresh the power prediction every 2-3 meters that the vehicle runs.

The electronic navigation three-dimensional map ("three-dimensional map" for short) can provide Electronic Horizon for the vehicle. The Electronic Horizon refers to the road information, especially the information of longitude, latitude and longitudinal slope of the highways along the way, contained in the three-dimensional map within the specified range in front of the heading of the vehicle. The predictive control is implemented for the traditional heavy duty diesel trucks, and limited to the power assembly, and the traditional heavy duty diesel trucks are not suitable for frequent quick change of the working conditions, and have no regenerative braking energy recovery function; and generally, only the three-dimensional map electronic horizon within the range of ten kilometers can be used roughly. However, the ACE heavy duty trucks of the invention can effectively utilize various electronic horizons from 10 km to 1000 km in the long haul logistics scenario and achieve the beneficial effect of significantly reducing the fuel consumption compared with the traditional heavy duty diesel truck by means of predictive adaptive cruise control. Refer to the following for details.

For the ACE heavy duty truck running normally on closed highways with active braking or acceleration seldom performed, its speed is basically constant, and the time variation of vehicle road load power is mainly originated from the grade power change brought about by the longitudinal slope change of the highways. However, since the distribution function of the highway longitudinal slope of the vehicle running path is fixed and known in advance, the VCU of ACE heavy duty truck may be within 0.1s; the future demand for vehicle road load power is effectively predicted by quickly refreshing and calculating the time-varying function of vehicle road load power within the vehicle electronic horizon according to the actual road conditions and vehicle kinetic equation. The invention transforms the problem of fuel consumption optimization of ACE heavy duty truck driving on the same lane of a highway into an equivalent artificial intelligence (AI) problem of AlphaGo playing chess. Through proprietary structured big data and machine learning, the fuel saving AI unit can achieve lower totalfuel consumption than driven by human drivers.

According to the predictive power control system for the ACE heavy duty trucks presented by the invention, an electrical power split device (ePSD) is commanded through a vehicle control unit, and 100-kilowatt level electrical power can be accurately and dynamically allocated among an engine-driven generator set, a battery pack and a driving motor within tens of milliseconds of system response time so that the engine condition is stably set to its high efficiency condition point for a long time; and the 100-kilowatt level transient change of the grade power within the sub-second time is offset through 100-kilowatt level fast charging and discharging of the battery pack in real time, and the road load power balance required by a vehicle dynamic equation is met at any time. Compared with traditional diesel vehicles, the ACE heavy duty truck has the advantage that the overall fuel consumption drop in long haul logistics can reach 30% on the premise of ensuring the power, freight timeliness and safety of the vehicle.

The first aspect of the invention provides a hybrid vehicle comprising a generator set, used for converting chemical energy of vehicle fuel into electric energy; an electrical power split device (ePSD), configured as a power electronic network with three ports, wherein the first port of the ePSD is in bidirectional AC electric connection with the output end of the generator set; the second port of ePSD is in bidirectional AC electric connection with at least one driving motor; the third port of ePSD is in bidirectional DC electric connection with at least one power type battery pack; an automatic transmission, connected with a transmission shaft of the vehicle bidirectionally and mechanically; a map unit, storing an electronic navigation 3D map in advance, containing the longitude, latitude, longitudinal slope and other information of the longitudinal road at the section where the vehicle is running; at least one driving motor, connected with the second port of ePSDbidirectionally and electrically, with the output shaft of the driving motor connected with the automatic transmission bidirectionally and mechanically, wherein the driving motor can be operated for converting the electric energy into the mechanical energy for driving the vehicle, or converting the mechanical energy of the vehicle into the electric energy, and charging the battery pack through the ePSD, wherein, no mechanical connection exists between the generator set and the driving motor or between the generator set and the automatic transmission; the vehicle further comprises a vehicle control unit (VCU), and the vehicle control unit is used for controlling at least one of the generator set, the ePSD, the driving motor, the automatic transmission and the battery pack based on 3D highway electronic map data in a vehicle-mounted satellite navigation receiver and/or the map unit independently.

The ACE heavy duty truck system architecture of the invention is an advanced add program pure electrically-driven heavy duty truck, which realizes the all-digital software defined powertrain with ePSD as the core. During the hardware design of ePSD three-port power electronic network, a margin is reserved for the hardware function and performance, and the product is continuously upgraded and evolved through the software remote update iteration (OTA) of each ACE heavy duty truck throughout its full operation life cycle. Relying on continuous software remote update (OTA), the actual performance of the powertrain of each ACE heavy duty truck is corrected and improved continuously in a tailored manner, that is, ensure that each ACE heavy duty truck can not only meet the emission regulation limits at all times and places, but also optimize the fuel saving effect of the heavy duty truck within the 700, 000 km warranty period required by the emission regulations.

In some embodiments, the ePSD is configured as a three-port power electronic network which contains three 100kW level unique functional modules: the first port is internally connected with a bidirectional AC-DC converter (also known as an inverter), the second port is internally connected with at least one bidirectional AC-DC converter (also known as an inverter), and the third port is internally connected with at least one bidirectional buck boost DC-DC converter (also known as a chopper). The disclosure focuses on the main peripheral input/output characteristics of the ACE heavy duty truckePSD and contains three functional modules. The collection of various topological structures of power electronic circuits realizing the above three functional modules belongs to the scope of the invention. The physical form of ePSD is that the above three functional modules are either packaged in a metal box in a centralized way, or separately packaged and arranged with the generator MG1, the driving motor MG2 and the battery pack in a decentralized way.

All the DC ports of the three functional modules in ePSD are connected to the DC bus junction point X bidirectionally and electrically. The DC voltage and current time-varying function at this point always meets the following electrical power balance equation: $P_{MG1}(t) + P_{BAT}(t) = P_{MG2}(t)$. Where $P_{MG2} = P_v$ is an independent variable, equal to the road load power of the vehicle. $P_{MG1}$ is another independent variable, which can be set at several specific operating points of internal combustion engine and motor MG1 with fixed speed and specified torque to ensure the highest thermal efficiency of combustion of the internal combustion engine and exhaust emission optimization at these operating points.

The three functional modules of ePSD are commanded by the vehicle control unit (VCU), working together to adjust the dependent variable $P_{BAT}(t)$ in real time, and shift peak load to meet the power balance equation,

$$P_{BAT} = P_{MG2} - P_{MG1}。$$

where

$P_{MG1} > 0$, generated power; $P_{MG1} < 0$, power consumption or driving power (with engine in-cylinder braking as load)

$P_{MG2} > 0$, driving power; $P_{MG2} < 0$, regenerative braking power or generated power

$P_{BAT} > 0$, discharge power; $P_{BAT} < 0$, charging power

The preferred range of rated voltage $V_{bus0}$ of ePSD internal DC bus is between 600V and 800V. The third port of the ePSD can be connected to at least one power type battery pack bidirectionally and electrically, the rated voltage of each battery pack $V_{bat} < V_{buso}$, and the third port can also be connected with a 100kW brake resistor $R_{bk}$ (may be equipped with a radiator) unidirectionally and electrically as the effective electric load when the ACE heavy duty truck runs on a long-downhill path, the driving motor realizes the retarder function through regenerative braking, and the battery pack is fully charged (SOC= 100%).

In some embodiments, the port III of ePSD can be connected with multiple battery packs with different rated voltages or even cells with different electrochemical components bidirectionally and electrically, which brings multiple benefits to optimize the cost effectiveness of ACE heavy duty truck system, and this will be described in detail later. In some embodiments, the hybrid vehicle further comprises a satellite navigation receiver which is a dual-antenna carrier phase real-time kinematic (RTK) differential receiver, capable of calculating the longitude, latitude, altitude, longitudinal slope and linear velocity of a longitudinal road in the running process of the vehicle in real time; or a high precision single-antenna satellite navigation receiver, capable of calculating the longitude, latitude and linear velocity of the longitudinal road at the meter-level positioning precision in the running process of the vehicle in real time; and a vehicle-mounted inertial navigation unit (IMU) containing multiple acceleration sensors and gyroscopes, or a dynamic tilt sensor, capable of measuring the longitudinal slope of a road in real time with an accuracy of better than 0.1%.

In some embodiments, the VCU is configured for predictive control over the generator set and the battery pack based on the longitude and latitude, calculated by the satellite navigation receiver in real time, of the vehicle in the running process, and in combination with the longitude, latitude and longitudinal slope, stored in the three-dimensional map, of the longitudinal road within the electronic horizon range in front of the vehicle; and/or predictive control over the generator set and the battery pack based on the longitude, latitude, slope and linear velocity, calculated by the RTK receiver, of the vehicle in the running process, and in combination with the longitude, latitude and longitudinal slope, stored in the three-dimensional map, of the longitudinal road within the electronic horizon range in front of the vehicle.

In some embodiments, the VCU is further configured for predictive control over the generator set and the battery pack based on the longitudinal slope calculated by the RTK receiver and the electronic horizon of the three-dimensional map in the running process of the vehicle when it is detected that the difference between the longitudinal slope calculated by the RTK receiver and the longitudinal slope of the same position stored in the three-dimensional map exceeds the allowable tolerance.

In some embodiments, the VCU is further configured for calibrating built-in clocks, comprising the built-in clocks of the VCU, of subsystem microprocessors based on the time service of the RTK receiver in real time, and annotating the data in the unique time series; establishing a data set by assembling the measurement parameters and/or operating parameters of at least two subsystems of the RTK receiver, the navigator, the generator set, the ePSD, the driving motor, the automatic transmission and the battery pack on the first dimension; arranging a plurality of data sets on the second dimension according to the time series provided by the calibrated clock so as to form a dedicated structured big data used for describing the dynamic operating condition of ACE heavy-duty trucks, called the structured big data of ACE heavy-duty trucks.

In other words, the VCU is configured for calibrating built-in clocks, comprising the built-in clocks of the VCU, of subsystem microprocessors based on accurate time service of the RTK receiver, and annotating the data in the unique time series; assembling the measurement parameters and/or operating parameters of at least two subsystems of the RTK receiver, the navigator, the generator set, the ePSD, the driving motor, the automatic transmission and the battery pack into the structured big data of ACE heavy duty trucks used for describing the dynamic operating condition of the hybrid vehicle.

Optionally, the structured big data of ACE heavy duty trucks can be encrypted, and accordingly uploaded in a safer way to the cloud computing platform for storage through the mobile Internet in real time (sub-second level delay) or in time (hour level delay) afterwards for subsequent analysis and processing.

In some embodiments, the generator set is composed of an internal combustion engine and an alternator, wherein the internal combustion engine is connected with the alternator bidirectionally and mechanically, and the alternator is connected with the AC/DC converter module in the first port of ePSDunidirectionally and electrically. This combination can realize various working modes. In addition to the basic power generation mode of generator MG1 driven by the internal combustion engine, the 100kW MG1 can easily replace the thousands-kilowatts-class starting motor configured for the traditional internal combustion engine to realize the automatic start-stop operation mode of the engine of the ACE heavy duty truck for further fuel saving under urban conditions and severe highway congestion. MG1 can also take the internal combustion engine having the function of in-cylinder braking as a load, consume DC power through the inverter, and provide redundant long-term payloads for the regenerative braking power generation of the main driving motor MG2 in the slowdown working mode of the ACE heavy duty truck running on a long-downhill path.

In some embodiments, the VCU is configured for control over at least one of the internal combustion engine, the battery pack, the automatic transmission and the driving motor based on a universal characteristic curve digital model of the internal combustion engine, the charge-discharge characteristic digital model of the battery pack, the characteristic digital model of the automatic transmission and the characteristic digital model of the driving motor correspondingly.

In some embodiments, the universal characteristic curve digital model of the internal combustion engine comprisesan idle working point without road load, and several high efficiency working points with the minimum specific fuel consumption in the engine, and the VCU is further configured for enabling the internal combustion engine to work basically at the idle working point or the high efficiency working point, thus enabling the internal combustion engine to work stably at the idle working point or the high efficiency working point for a long term; the surface condition of the internal combustion engine of the traditional heavy duty truck is changed into the point condition of the internal combustion engine of the ACE heavy duty truck, and smooth switching among different condition points can be achieved.

In some embodiments, the VCU is further configured for real-time collection and local storage of the structured big data of the ACE heavy duty trucks in the running process of the vehicle; and sending and storing the stored structured big data onboard to the cloud computing platform via a mobile Internet in real time (sub-second delay) or in time (hour delay) for subsequent analysis and processing of big data of the ACE heavy duty truck. The second aspect of the invention provides a cloud computing platform, comprising at least one cloud server; each server comprises a processing unit; and a memory, coupled to the processing unit and comprising computer program codes; when the computer program codes are executed through the processing unit, the server executes the following operations of:

receiving and storing the dedicated structured big data from multiple ACE heavy duty trucks via the mobile Internet, wherein each ACE heavy duty truck comprises:

- a generator set, used for converting chemical energy of vehicle fuel into electric energy;

- an electrical power split device (ePSD), configured as a power network with three ports, wherein the first port of the ePSD is connected with the output end of the generator set bidirectionally and electrically;

- a battery pack, connected with the third port of the ePSDbidirectionally and electrically;

- ;

- an automatic transmission, connected with a transmission shaft of the vehicle bidirectionally and mechanically;

- a navigator, used for prestoring an electronic navigation three-dimensional map comprising the three-dimensional information of the longitude, latitude and longitudinal slope of the longitudinal road at the road section where the vehicle runs;

- at least one driving motor, connected with the second port of the ePSDbidirectionally and electrically, with the output shaft connected with the transmission bidirectionally and mechanically, wherein the driving motor can be operated for converting the electric energy into the mechanical energy for driving the vehicle, or converting the mechanical energy into the electric energy, and charging the battery pack through the ePSD; wherein, no mechanical connection exists between the generator set and the deriving motor or between the generator set and the automatic transmission;

- a vehicle control unit (VCU) used for controlling at least one of the map unit, the generator set, the ePSD, the driving motor, the automatic transmission and the battery pack based on 3D road data from a vehicle-mounted satellite navigation receiver and/or the map unit through a data bus (e.g. CAN bus) of the vehicle independently;

forming dedicated machine learning algorithms based on the dedicated structured big data of vehicle operation received from the multiple ACE heavy duty trucks;

conducting training on a cloud fuel-saving artificial intelligence (AI) brain based on the formed dedicated machine learning algorithms through the computing capability of the cloud platform, wherein the structured big data comprises the operating data related to at least one of the generator set, the ePSD, the driving motor, the automatic transmission and the battery pack; and

making a response to the request of a certain ACE heavy-duty trucks; aiming at the vehicle-specific journey, the cloud fuel-saving AI brain provides customized fuel-saving strategies as the default initial scheme of the fuel-saving strategies of the VCU. The VCU of the vehicle modifies the default fuel saving scheme in real time according to the real-time road conditions to achieve the optimal fuel saving effect.

In some embodiments, wherein, each vehicle further comprises a high precision satellite navigation receiver which is a dual-antenna carrier phase real-time kinematic (RTK) differential receiver, used for calculating the longitude, latitude, altitude and longitudinal slope of a longitudinal road and the linear velocity of the vehicle in the vehicle running process in real time, wherein the measurement data received from the multiple vehicles further comprises road three-dimensional data comprising the longitude, latitude and longitudinal slope, measured by the multiple vehicles at the same road section of a running way, of a plurality of longitudinal roads, and the operations further comprise: timely transmitting the multiple road three-dimensional data to electronic navigation three-dimensional map manufacturers; and updating the three-dimensional map stored in the vehicle navigator.

Thus, the precision of the three-dimensional map can be improved in a crowd-sourcing mode continuously, and the freshness of the three-dimensional map is kept; and the three-dimensional map stored in the vehicle navigator is updated continuously.

Brief Description of the Drawings

Figure 1 is a system block diagram of the ACE heavy duty truck disclosed by one embodiment of the invention;

Figure 2 is a subsystem block diagram of the electrical power split device (ePSD) of the ACE heavy duty truck disclosed by one embodiment of the invention; and

Figure 3 is a system block diagram of data switching between the ACE heavy duty truck and the mobile Internet and the cloud computing platform disclosed by one embodiment of the invention;

In these figures, the same or similar reference symbols are used for representing the same or simile elements.

Detailed Description of the Preferred Embodiments

The following is the description of the embodiments by reference to some examples. It should be known that the description of these embodiments are only for those skilled in the art to properly understand the invention and accordingly achieve the invention, and are not hints of limitations to the invention.

For example, the term "including" and the variants thereof should be interpreted as the open term of "including but not limited to". The term "based on" should be interpreted as "at least partially based on". The term "an embodiment" and "a kind of embodiment" should be interpreted as "at least one embodiment". The term "another embodiment" should be interpreted as "at least one other embodiment". The terms "first", "second" and the like can refer to different or the same objects. The followings may include other definite and implicit definitions.

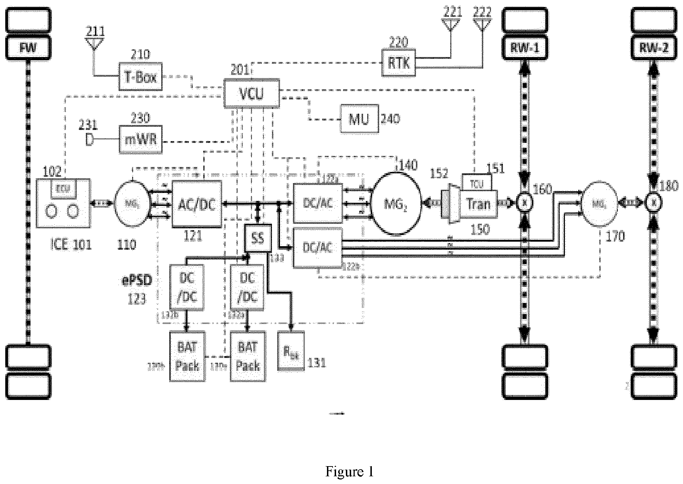

The following is the description of the basic principles and some embodiment of the invention by reference to the figures. Figure 1 shows the power assembly, the vehicle control unit, core sensors and other devices of the hybrid heavy duty truck disclosed by the embodiment of the invention. The system can be not only a set of $4\times2$ powertrain system with only one driving shaft (connected with a rear wheel "RW"), but also a set of $6\times2$ powertrain system comprising a driving shaft and a driven shaft, or a 6x4 powertrain system comprising a driving shaft and a driven shaft. The heavy duty truck adopting the powertrain systems in Figure 1 can be called the ACE (Automated, Connected, Electrified) heavy duty truck. In some embodiments, the heavy duty truck can be, for example, the hybrid heavy duty truck with the gross weight of larger than 15 tons for long haul freight.

As shown in Figure 1, generally, the ACE heavy duty truck comprises a generator set 100, an electrical power split device (ePSD) 123, at least one main battery pack 130a, an automatic transmission (Tran) 150, at least one driving motor 140 and a vehicle control unit (VCU) 201. The main battery pack 130a and the main driving motor 140 are required as standard configuration, while the auxiliary battery pack 130b and the auxiliary driving motor 170 are optional.

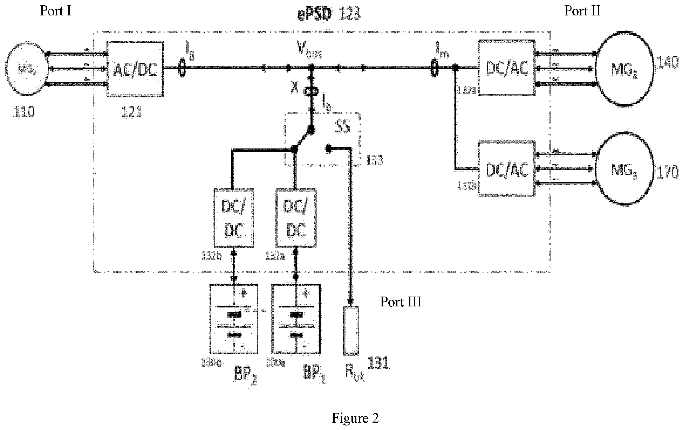

Specifically, the generator set 100 comprises an internal combustion engine 101 and an engine control unit (ECU) 102, the engine 101 output shaft is connected with the generator (MG1) 110 bidirectionally and mechanically and mainly used for converting the chemical energy of onboard fuel such as diesel or natural gas into mechanical energy and then to electric energy. As shown in Figure 2, the ePSD 123 is a Power Electronics Network with three ports, wherein the port I (also called "the first port") of the ePSD is connected with the three-phase AC output end of the generator set 100 bidirectionally and electrically. The battery pack 130a and/or 130b is DC-connected with the port III (also called "the third port") of the ePSD 123 bidirectionally and electrically. The brake resistor 131 is DC-connected with the port III of the ePSD 123 unidirectionally and electrically. The driving motor 140 and/or 170 is AC-connected with the port II (also called the "second port") of the ePSD bidirectionally and electrically. As shown in Figure 1, the output shaft of the automatic transmission 150 is connected with a transmission shaft 160 of the vehicle bidirectionally and mechanically, and controlled by the transmission control unit (TCU) 151. The main driving motor 140 is connected with the input shaft of the transmission 150 through a flexible mechanical coupler 152. The driving motor 140 can be operated for converting the electric energy into the mechanical energy for driving the ACE heavy duty truck, or converting the mechanical energy of the ACE heavy duty truck into the electric energy to charge the battery pack 130a through the function modules, i.e. the inverter 122a and the chopper 132a, in the ePSD 123.

In this paper, "unidirectional" or "bidirectional" connection refers to whether the direction of the power or mechanical power flow or energy flow flowing from the power source to the load is reversible or not, and whether the roles of the power source and the load can be exchanged with each other or not at any time. During unidirectional connection, the roles of the power source and the load are fixed, and the power flow from the power source to the load is unidirectional and irreversible; during bidirectional connection, the roles of the power source and the load can be switched at any time, and the direction of power flow is reversible.

The VCU 201 as one of the key components of the disclosure is used for controlling one or more of the generator set 100, the ePSD 123, the driving motor 140, the automatic transmission 150 and the battery pack 130 based on analysis and calculation of the locating data received from the vehicle-mounted high precision satellite navigation receiver 220 and the priori data of 3D electronic map stored by the map unit 240 through a vehicle-mounted data bus (not shown, such as CAN bus) in an "independent" way separately or simultaneously.

In some embodiments, the VCU 201 can be an automotive high-performance embedded microprocessor. It should be known that, non-restrictively, the VCU 201 can be also a hardware logic unit, comprising a field-programmable gate array (FPGA), an application-specific integrated circuit (ASIC), a application-specific standard product (ASSP), a system on chip (SOC), a complex programmable logic device (CPLD), etc.

For example, the vehicle-mounted generator set 100 formed by assembling a plurality of subsystems can be controlled by the VCU 201 for converting the chemical energy of the vehicle fuel into the mechanical energy and then into electric energy. For another example, the ePSD 123 can be especially controlled through the VCU 201 for achieving quick smooth switching (subsequently described in detail) among different working modes of the hybrid power assembly to meet the requirements of the road load power balance.

Figure 1 shows one preferred embodiment of the generator set 100, comprising an internal combustion engine (ICE) 101 and an engine control unit (ECU) 102. The internal combustion engine (ICE) 101 is connected with the alternator 110 bidirectionally and mechanically. The three-phase AC output end of the generator 110 is AC-connected with the port I of the ePSDbidirectionally and electrically. In another alternative embodiment, the generator set 100 can also be provided with a vehicle-mounted hydrogen fuel cell engine (FC Engine). At this time, the hydrogen fuel cell output of the generator set 100 is DC and connected with the port I of the ePSDunidirectionally and electrically. At this time, the port I internal function module of the ePSD will be changed from a bidirectional AC-DC converter (also called the inverter) to a unidirectional DC-DC converter (also called the chopper). To reduce hydrogen consumption (g/km) of fuel cells and prolong service life, it is necessary to keep them working at the high efficiency point stably for a long time to avoid transient, substantial and quick switching between working conditions.

Preferably, the internal combustion engine 101 is a diesel or natural gas engine for six-cylinder heavy duty trucks, with the displacement of 7L-11L and the peak power between 240-360 kilowatts. The internal combustion engine with larger displacement (11L-15L) can also be used, the peak power of the engine is higher, a higher power margin is reserved, the climbing power performance of the vehicle is better when the vehicle encounters an uphill road condition of more than a few kilometers on a highway, but the fuel saving effect will be slightly weaker than that of the engine with optimal displacement, the system cost is higher, and the cost effectiveness is suboptimal. The internal combustion engine with small displacement (lower than 7L) has lower peak power; though the fuel-saving effect is obvious and the cost is low, the power margin of the generator set is insufficient; if the power in the battery pack is exhausted and it is impossible to continue to provide top-up electricity power for the driving motor when the vehicle encounters a large upslope condition as long as more than a few kilometers on a highway, the power performance of the ACE heavy duty truck is obviously insufficient, the vehicle can not continue to go up a slope until it is downshifted into a lower gear and slowed down, and the system cost effectiveness is suboptimal. It should be known that, optionally, the engine 101 can also be a vehicle gas turbine meeting the above power requirements. The gasoline engine is obviously inferior to the diesel engine in terms of thermal efficiency of combustion, durability, service life and the like, so it is not suitable for heavy duty trucksfor long haul logistics.

It is noted that, as shown in Figure 1, in the embodiments of the invention, no mechanical connection between the internal combustion engine 101 and the vehicle transmission shaft or driving wheel is provided, and accordingly the working conditions of the internal combustion engine and the vehicle working conditions are decoupled completely, so that the internal combustion engine 101 is enabled to stably work at several operating points specified in the high efficiency area (including the optimal fuel efficiency range and/or the optimal discharging range) of the universal characteristic curve for a long time. The internal combustion engine is changed from the surface condition to the point condition, which opens up a new field for breaking through the current upper limit of thermal efficiency of the internal combustion engine, optimizing the comprehensive fuel consumption of the ACE heavy duty truck to the maximum extent and reducing the comprehensive emissions stably for a long term through technological innovation; it also greatly reduces the complexity and cost of the design, calibration and manufacturing of the internal combustion engine body, ECU and tail gas processing system with the continuous introduction of new mandatory regulations on auto emissions worldwide in the next 20 years. In addition, due to such mechanical complete decoupling of power transmission between the engine and the vehicle, the inevitable "second level" control delay caused by mechanical connection in the traditional power assembly technology is eliminated.

Compared with an spark-ignition gasoline engine (SI), a compression ignition diesel engine (CI), with the features of fuel saving, low speed, large torque, practicality, durability, ultra-long life, high performance cost and the like, is the preferred engine for most heavy duty trucks (exceeding 97%) in the world. However, in the aspect of pollutant emissions, especially pollutant emissions of nitrogen oxides (NOx) and particulate matter (PM) harmful to atmospheric environment and human health, the diesel engine is inferior to the gasoline engine. The world's mainstream post-processing technologies for reducing NOx and PM emissions from the diesel engines of heavy duty trucks include selective catalytic reduction (SCR) and diesel particulate filter (DPF), and the system can work normally and efficiently provided that both the SCR and the DPF reach the specified high temperature inside. Both the pollutant emissions and specific fuel consumption (g/KWH) of the diesel engine are greatly increased during cold start and instantaneous substantial regulation of output power; while the engine works stably in the high efficiency combustion working area under the working condition of highways, and both the pollutant emissions and the specific fuel consumption are small at the moment. For the traditional heavy duty truck, it is impossible to optimize both the fuel consumption and the pollutant emission within the whole range of speed/torque of the universal characteristic curve of the engine. The ACE heavy duty truck of the invention can specify that the internal combustion engine of the ACE heavy duty truck stably works at the high efficiency combustion point for a long time, so that the working conditions of engine cold-start and rapid change in the speed and torque are basically eliminated, and the emissions of pollutants (NOx, PM) can be reduced while the specific fuel consumption and carbon emissions are reduced to realize the synergistic effect of energy conservation and emission reduction. The SCR system can reduce the consumption of the consumable, i.e. urea (g/100km), due to less NOx in the tail gas of the ACE heavy duty truck, thus further reducing the operating costs. In addition, the DPF of the hybrid heavy duty truck works stably at the high efficiency area for a long time, DPF Active Regeneration performed through periodic stop is eliminated basically to eliminate the user shortcoming of deposition of a large number of particles inside the DPF with excessive time and fuel consumption, and further reduce the fleet operating cost.

For most domestic engines and key power assembly component suppliers with insufficient technological accumulation, the Limits and Measurement Methods for Emissions from Light-duty Vehicles (China VI) coming into force in China in 2021 for heavy duty diesel trucks are huge technical and business challenges. On the premise of ensuring that the complete vehicle reaches and continuously meets the requirements of China VI, especially the warranty period of the 700, 000 km for the discharge system when leaving the factory, the technical performance requirements of the diesel engine used by the ACE heavy duty truck of the invention are much lower or relaxed than the technical requirements of the traditional diesel engine of the heavy duty truck after dimensional reduction from surface condition to point condition. There are many alternative high cost effectiveness technologies, which provides another new field for survival and development of broad heavy duty truck powertrain suppliers in China in the later period of China VI.

Preferably, the alternator 110 is a permanent magnet synchronous motor (PMSM), and the rated power is 150-280 kilowatts; and the AC induction motor or reluctance motor meeting the above rated power requirements can also be selected. The peak power of the engine 101 should be matched with the peak power of the alternator 110 (the former is slightly higher) to give full play to the respective maximum potentials. Preferably, the controller 121 of the generator is a bidirectional AC-DC converter (also called the inverter) comprising at least one insulated gate bipolar transistor (IGBT) module, with both the rated power and the peak power slightly higher than the corresponding power values of the engine. The generator set simply provides the necessary average electric power for vehicle running at high speed stably for a long time, and the battery pack provides the driving motor with a fast changing 100-kilowatt-class bidirectional electric power flow for peak-load shifting through the ePSD to meet the power balance required by the vehicle power performance equation in real time. At the moment, the generator 110 is often the load of the engine 101, and the peak power of the generator 110 and that of the inverter 121 only need to be slightly higher than their rated power, for example, 15% higher. The generator 110 can also replace the standard kW-class starting motor and generator of the traditional engine. The generator 110 is controlled through the inverter 121 to realize the start or start-stop function. The in-cylinder braking function of the engine 101 can also be used as the effective load of the motor 110 in the driving mode to become a part of the long-downhill retarder system of the ACE heavy duty truck.

The ePSD 123 shown in Figure 2 is a 100-kilowatt power electronic network with three ports, wherein the power electronic network comprises at least one IGBT or SiC power module, but can exclude any kilowatt-class power source or kWh-class electric energy storage device. Various feasible power electronic circuit designs are available to achieve the input/output characteristic and various system functions of the three-port network. It should be noted that the invention is not aimed at limiting the implementation of specific circuit topology of the three-port network comprising the IGBT or SiC module, but all power electronic circuit designs capable of realizing the core input/output functions of the ePSD (to be specifically described through the examples shown as follows) should be within the range of the invention. In view of the integrated design flexibility of the power electronic modules, the inverters 121, 122a and 122b, the soft switch 133 and the choppers 132a and 132b as the core modules inside the ePSD123 are either integrated in one metal box, or dispersed in multiple metal boxes, and packaged and arranged in a decentralized way in order to improve the system performance and/or reduce the cost. At present, IGBT is the most cost-effective mainstream power electronic power module. The SiC module is a rising star with better performance but higher cost in the near future. With the maturity of SiC industry chain, its application proportion will gradually increase. The IGBT modules mentioned in the invention can generally refer to various industrialized power electronic power modules, including IGBT and SiC.

In the embodiment shown in Figure 2, the AC port of the inverter 121 in the port I of the ePSD is connected with the three-phase AC output end of the generator 110 bidirectionally and electrically; the AC port of the inverter 122a in the port II is connected with the three-phase AC input end of the main driving motor 140 bidirectionally and electrically, and the AC port of the inverter 122b is connected with the three-phase AC input end of the auxiliary driving motor 170 bidirectionally and electrically; one end of the chopper 132a in the port III is DC-connected with the battery pack 130a bidirectionally and electrically, and one end of the chopper 132b is DC-connected with the battery pack 130b bidirectionally and electrically. The DC ends of all the inverters are connected to the DC bus junction X of the ePSD bidirectionally and electrically, and the other ends (mostly the one with high DC voltage) of all the choppers are also DC-connected to the DC bus junction X of the ePSD bidirectionally and electrically through the high-power electric control three-terminal switch (also called the soft switch) 133. If the rated voltage $V_{bp}$ of the battery pack 130a and/or 130b is increased to equal to the rated voltage $V_{bus0}$ of the DC bus of the ePSD, it is considered that the chopper 132a and/or 132b can be omitted in order to reduce the cost, and the battery pack 130a and/or 130b is directly DC-connected to a terminal of the soft switch 133 bidirectionally and electrically. However, the battery pack 130a and/or 130b will lose the function of actively and dynamically adjusting the 100kW-class charging and discharging power by doing like this; moreover, the ePSD also loses the ability to flexibly match battery packs with different rated voltages and capacities through software definition (onsite or OTA remote iteration) according to the actual application requirements of the ACE heavy duty truck.

The DC bus junction "X" in the ePSD of the invention is the nerve center of the ACE heavy duty truck power assembly. The unique time-varying function of DC voltage at this junction and a set of DC current time-varying functions of the branches mathematically describe a core parameter set of the dynamic road load power balance and powertrain conditions of the ACE heavy duty truck completely and accurately, which is the key point of energy saving, emission reduction and safety control of ACE heavy duty truck operation. The main driving motor 140 and the battery packs 130a and 130b are never permitted to input electric energy into the ePSD simultaneously through the port II and the port III. For example, the ePSD can be subjected to pulse-width modulation (PWM) control through the three major function modules (inverter 121, inverter 122a, chopper 132a), and the accurate, continuous and adjustable distribution of 100-kilowatt-class electric power is achieved among the three ports within the 10-millisecond-class response time to meet the requirements of the road load power $P_v$ (Road Load Power) changing continuously during the operation of vehicles in real time. Thus, the ePSD 123 is controlled by the VCU 201, enabling quick and smooth switching among different working modes of the hybrid power assembly; and the fuel consumption and emissions of the internal combustion engine are optimized (i.e. minimized) on the premise of meeting the vehicle driving power performance, safety and freight timeliness.

Optionally or additionally, the ePSD can be further provided with a plurality of sensors and memories so as to record the dynamic DC voltage $V_{bus}(t)$ and direct currents $I_g(t)$, $I_m(t)$, $I_b(t)$ and other data at the DC bus junction "X" at the measuring frequency higher than 10 Hz, and the data of the sensors and the memories is regarded as a part of the dedicated structured big data of the ACE heavy duty truck, and uploaded to the cloud computing platform 001 for storage through the vehicle-mounted wireless communication module 210 in real time or in time for subsequent analysis and processing. The following is the description of the implementation mode of the dedicated structured big data.

The known internal electric power balance equation of the ePSD is: $P_g+P_b=P_m$. Where, $P_g \in [-P_{gx}, P_{gx}]$, $P_b \in [-P_{bx}, P_{bx}]$, $P_m \in [-P_{mx}, P_{mx}]$. $P_{gx}$ is the peak power of the generator 110 (which shall be slightly less than the peak power $P_{ICEx}$ of internal combustion engine), $P_{bx}$ is the peak charging and discharging power of the main battery pack 130a, $P_{mx}$ is the peak power of the main driving motor 140, $P_{bx}>P_{mx}$. $P_g$ is the output power of the generator 110, the positive value is the generating power, and the negative value is the driving power. $P_b$ is the battery power, the positive value is the discharge power, and the negative value is the charging power. $P_m$ is the driving motor power, the positive value is the driving power, the negative value is the regenerative power for regenerative braking and power generation for the purpose of recycling energy. The invention provides a pure electric vehicle, so the driving power is equal to the road load power($P_m=P_v$). The embodiment of the invention is described by focusing on the scenario in which there are only the main driving motor 140 and the main battery pack 130a. If the ACE heavy duty truck system also comprises the auxiliary driving motor 170 and the auxiliary battery pack 130b, it is easy for ordinary technicians in the industry to extend the description.

- Mode 1: The vehicle is static, $P_g+P_b=0$, the battery pack 130a is charged by the generator 110 through the ePSD.

- Mode 2: The vehicle runs on a level road or uphill, $P_g+P_b=P_m$. When $P_g>P_m>0$, the driving motor is firstly powered through the generator, and the vehicle power is provided; and the surplus power is used for charging the battery pack. When $P_g < P_m$, the driving motor 140 is powered through the generator 110 and the battery pack 130a simultaneously, and then the power requirements of the vehicle can be met. If the fuel saving needs to be maximized, the internal combustion engine 101 should work at several specific high efficiency condition points stably for a long time, or the internal combustion engine should be idle, even shut down completely. $P_b$ changes following $P_m$ through dynamic regulation of the ePSD in real time and reversely for peak load shifting, and $P_g$ remains constant ($P_g(t)=P_m(t)-P_b(t)$) on the premise of meeting the requirement for vehicle power performance at all times. In other words, the CVU can be used for stably setting the working point of the internal combustion engine to be at the high efficiency condition point where the specific fuel consumption (g/KWH) is minimum, and commanding the ePSD to precisely regulate the direction and value of charge and discharge power of the battery pack in real time, so as to offset the 100-kilowatt-class transient change of driving motor power and achieve the objective of fuel saving. If the vehicle meets a large upslope with the longitudinal slope of more than 2.0 degrees and the slope length of more than 10 km, since the total capacity of the battery pack is limited, the battery pack may be run off in the Charge Depleting working mode and temporarily loses the ability to continue to provide upgrade power assistance; at the moment, the vehicle can only be driven by the generator peak power $P_{gx}$, fails to constantly reach the road load power $P_v$ for running uphill at constant speed, shifts gears to speed down, and continues to go up a slope. At the moment, the power and freight timeliness of the ACE heavy duty truck are reduced momentarily. The ACE heavy duty truck for long haul logistics seldom encounters large and long slopes in most working scenarios. For ACE heavy duty trucks which often run on highways in mountainous areas, installation of one or two high-capacity power type battery packs may be considered to improve the power performance of the vehicles which often work in the scenario of going up a long slope at high speed under heavy loads.

- Mode 3: When the vehicle runs on a downhill, the engineengine can be shut down, and the electric power output $P_g$ of the generator 110 is zero; at the moment, the grade power item $P_{gd}$ is negative, and the grade power part exceeding $P_r + P_d$ is used for charging the battery pack through the regenerative braking function of the driving motor. At the moment, the vehicle runs downhill, and can reach the maximum speed allowed by laws for making up for part of lost time taken by the vehicle speeding down on an upslope. When the vehicle runs on a large downhill, the regenerative braking of the driving motor 140 and/or 170 will fully charge (SoC=100%) all battery packs (130a and/or 130b) when the vehicle is on the way down the slope. At the moment, the high-power soft switch 133 in the ePSD three-port power electronic network switches the DC current generated by regenerative braking of the driving motor to the 100-kilowatt-class brake resistor with radiator, and the electric energy is changed into heat energy and consumed to realize the function of the ACE heavy duty truck (non-mechanical braking) electric retarder. At the moment, the inverter 121 can also drive the motor 110, take the in-cylinder braking function of the engine 101 as the effective load of the motor 110, consume the excess regenerative electric energy from the main driving motor 140, and provide redundant backup for the high-power brake resistor 131.

The ACE heavy duty truck needs to be provided with the power type battery pack with super long service life, low temperature resistance, high safety and high cost effectiveness, and the battery cell must withstand 5C-10C rate of continuous charge-discharge and 15C-30C rate of peak charge-discharge (15s pulse); moreover, the charge rate is often higher than the discharge rate, the working environment temperature is -30°C~+55°C, and the equivalent deep charge-discharge (DoD 100%) cycle life is more than 12, 000 times. The battery pack shall be able to work normally after the vehicle is turned off for 24 hours outdoors at -30°C in cold winter, within two minutes of warm-up at idle speed in place, and after the vehicle is started to run. At the moment, the charge and discharge ability of the battery pack can be temporarily reduced. When the internal temperature of the battery cell rises to 10°C, the full charge and discharge ability is restored. However, the battery cell cannot be damaged due to low temperature and high rate charging, or even lead to the major hidden danger of thermal runaway of the battery cell.

Mainstream lithium-ion power cells, such as lithium iron phosphate (LFP) and ternary lithium (NCM or NCA), are generally protected against cold. When the cell temperature is lower than 0°C, the high rate discharge ability above 2C of the cell decreases obviously, and the low-temperature discharge does not damage the cell; at the moment, however, charging at low temperature with the high rate of above 2C easily causes Lithium Plating on the negative electrode of the cell and serious damage to the cell life; the damage mechanism is that the metallic lithium dendrites of the negative electrode puncture the diaphragm, which results in a short circuit in the cell and leads to the hidden danger of thermal runaway. The battery management system (BMS) will monitor the temperature of the battery cell in real time. It is forbidden to charge the battery cell at high rate at low temperature. It is difficult for the LFP, NCM or NCA mainstream power cell to undertake the important mission of the ACE heavy duty truck battery pack alone.

The lithium titanate oxide (LTO; positive ternary lithium/negative lithium titanate oxide) cell is currently the only mass-production power cell that can fully meet all technical requirements of the ACE heavy duty truck. After comparing the several mainstream lithium-ion cells mentioned above, LTO has the disadvantages of low specific energy (65wh/KG) and high cost ($/KWh many times more than LFP). There is no need to worry about the disadvantage of low specific energy of LTO because the ACE heavy duty truck has no limitation on the volume and weight of the battery pack with a total capacity of dozens of KWH; however, the disadvantage of high price may seriously affect the mass commercial use of ACE heavy duty trucks. Preferably, the LTO main battery pack 130a and the low-cost LFP or NCM auxiliary battery pack 130b are mixed and matched, and the system cost effectiveness can be optimized according to the specific application scenarios of the ACE heavy duty truck. The LTO main battery pack 130a is involved in work immediately after cold start of the vehicle parked outdoors for a long time in winter; the auxiliary battery pack 130b of LFP or ternary lithium is controlled by the chopper 132b and is not involved in high rate charging temporarily. After the cell of the auxiliary battery pack is heated to above 10°C in more than ten minutes, the auxiliary battery pack 130b is connected by the chopper 132b and involved in work. The battery pack is the most expensive subsystem in the ACE heavy duty truck. Mixing and matching two or more battery packs with different cells is good for reducing the total cost of battery packs and crucial to optimize the comprehensive cost effectiveness of the ACE heavy duty truck.

The single cell voltage of the LTO is only 2.2V, which is lower than the single cell voltage 3.3V of the LFP and the single cell voltage 3.7V of the NCM. Compared with a battery pack of a structure with low rated voltage and multiple cells connected in parallel, battery pack of a structure with high rated voltage and multiple cells connected in series and the same capacity is complex in design and high in manufacturing cost. The rated voltages of the battery packs used in most new energy passenger vehicles range from 200V to 400V The peak power of the ePSD of the invention is up to 500 kW, and the preferred range of rated voltage of the DC bus is 600V~800V. The preferred rated voltage value of the battery pack used in the invention is between 200V and 400V, with a high coincidence degree with the rated voltage range of the battery packs used in the new energy passenger vehicles with the huge annual total production and sales to facilitate making full use of the mature power battery supply chain of the new energy passenger vehicles nowadays, reducing the cost and guaranteeing the quality and supply. These battery packs can match the voltage of the ePSD DC bus through the bidirectional Boost-Buck DC-DC converter (Boost-Buck, also called the chopper) 132a and/or 132b in the port III of the ePSD. The chopper has another function of regulating the charge-discharge current amplitude of the battery pack 130a and/or 130b continuously and accurately through pulse width modulation (PWM) within 0%~100% of the charge-discharge current peak value.

Preferably, the main battery pack 130a can adopt lithium titanate oxide (LTO) cells with the capacity of 10KWh~30KWh, and can be charged and discharged for 5C~10C continuously; the pulse peak charge-discharge current is 15C-30C in 20 seconds, and the equivalent deep charge-discharge (100% DoD) life exceeds 12, 000 times; and the outdoor working environment temperature is -30~+55°C. Among known commercialized automotive power battery cells of various electrochemical formulations, only a set of LTO cells can meet the above strict requirements, but the cost (yuan/Wh) of the cells per kilowatt-hour (KWh or degree) is above three times the cost of other mainstream automotive lithium ion cells (such as LFP, NCM, NCA). The following power cells, such as NiMH battery, LFP battery, NCM/NCA battery or PbC battery, suitable for HRPSoC applications in severe working environment can be further selected. Two sets of such four kinds of cells may be required for meeting the requirements of the 100% DoD ultra-long cycle life exceeding 12 thousand times. The hybrid collocation of the above several kinds of cells can be taken into consideration, and the gross capacity of the battery pack is increased to 50KWh~95KWh so as to achieve the optimal cost effectiveness of the battery pack within the whole life cycle. Preferably, the auxiliary battery pack 130b can adopt mainstream lithium ion power type cells with the capacity of 30KWh~90KWh, such as lithium iron phosphate (LFP) and ternary lithium (NCM or NCA). Of course, a main/auxiliary battery pack with the total capacity of larger than 100KWh can be also selected, and the improvement of the power performance of the complete vehicle is benefited; the upper limit value and the charge-discharge rate peak of the equivalent cycle life of the battery pack is reduced, but the weight, volume and cost of the large battery pack are all increased; and comprehensive consideration is required. In the invention, the function of the battery pack is like a high-power engine with a small fuel tank, and the explosive power is high, but the endurance is insufficient. The battery pack can be used for providing the 100-kilowatt-class rated power of the driving motor for a long time (within 5~20 minutes) continuously, or providing the peak power of the driving motor above 300kW for a short time (within 30 seconds). Provided that the total capacity of the battery pack is 30 KWh, and the rated power of the driving motor is 300 KW; the battery pack (the capacity is 30 KWh) in the 100% state of charge (100% SoC) can be used for power supply (10C discharge) to the driving motor for 6 minutes at the 300-KW strength continuously so that the full load hybrid heavy duty truck (40 tons) runs for approximately 10km at the statutory speed limit of 90 km/h on a smooth car-free highway. The stored regenerative electric energy in the battery pack can be regarded as "near zero cost energy". If the rate of fuel saving needs to be improved, the electric energy in the battery pack should be discharged and charged whenever we like to improve the electric energy turnover rate or throughput capacity of the battery pack. When the battery pack is discharged, power is supplied for vehicle running through the driving motor. When the battery pack is charged, the energy is either the electric energy recovered through the regenerative braking of the driving motor, or the electric energy of the generator set. However, when the state of charge (SoC) of the battery pack is lower than 20% and the vehicle needs to continuously speed up or run on a large slope, the road load power of the vehicle is greater than the rated power of the generator set; and at the moment, the battery pack must be continuously discharged to make up for the power difference ($P_b=P_v-P_g$). At the moment, if the battery pack is under a charge depleting condition (SoC=0%), the ACE heavy duty truck can only shift to a lower gear to speed down, temporarily reducing the power performance and freight timeliness of the vehicle. The generator set and/or the driving motor can take a chance for charging the battery pack again until the vehicle runs on a level road or downslope.

Continue to refer to Figure 2, priority should be given during the design of several power modules of the ePSD (the port I is internally connected with the inverter 121, the port II is internally connected with the standard main inverter 122a and the optional auxiliary inverter 122b, the port III is internally connected with the high-power intelligent soft switch 133, the standard main chopper 132a and the optional auxiliary chopper 132b) to leave adequate room in the function and performance of power electronic hardware (Over-design) to facilitate subsequent remote modification and/or upgrade through software (OTA). The peak power of the inverter 121 shall be nearly 25% higher than the peak power $P_{gx}$ of the generator 110; the cost of the main inverter 122a is the highest, the peak power shall be nearly 15% higher than the peak power $P_{pmx}$ of the main driving motor 140, but the peak power of the auxiliary inverter 122b shall be nearly 25% higher than the peak power $P_{smx}$ of the auxiliary driving motor 170, where $P_{pmx} > P_{smx}$; the sum of the peak power of the main chopper 132a and/or that of the auxiliary chopper 132b shall be nearly 15% higher than the peak power $P_{pmx}$ of the main driving motor 140. Power semiconductor modules such as IGBT or SiC can improve the cost effectiveness significantly more quickly than the battery pack, motor and brake resistor. The continuous innovation and upgrading of the high-power semiconductor industry can be fully utilized to achieve a cost-effective ePSD by using a variety of power electronic topologies. The ePSD with hardware margin design is a software defined electrical power split device from the beginning, and the ePSD can be continuously improved and evolved through remote software update iteration (OTA). With the above modular design strategy, the three ports of the ePSD and external electrical loads such as motors and battery packs adopt standard mechanical and electrical interfaces, which are convenient for adapting to various motors and battery packs provided by many high-quality suppliers to meet the technical performance requirements of the system; and the cost effectiveness of ACE heavy duty trucks can be continuously improved step by step.

The inverters 121, 122a, 122b control the AC motors 110, 140, 170 in a Vector Control mode accurately, so that the amplitude and flow direction of 100kW electric power can be regulated continuously and accurately in real time (millisecond-class). The choppers 132a, 132b can not only be connected and matched with battery packs with different rated voltages, but also provide the function of real-time and accurate regulation of the 100-ampere-class current for battery pack charge/discharge. The ePSD 123 enables the ACE heavy duty truck to regulate three independent 100kW-class electric powers (generator power $P_g$ (t) with independent variables, driving motor power $P_m$(t) with independent variables, and battery pack charge/discharge power $P_b$t with dependent variables) accurately in real time according to the fuel saving control strategy and algorithm to meet the road load power balance equation of the vehicle at any time:
$P_v$(t) = $P_m$(t) = $P_g$(t) + $P_b$(t).

Preferably, the standard main driving motor 140 is a permanent magnet synchronous motor (PMSM), with the rated power of 200KW-300KW, peak power of 300KW~500KW and peak torque of 1800NM - 2500NM. The driving motor can be also an AC induction motor or a switch reluctance machine meeting the power and torque requirements. The peak power of the main inverter 122a must be higher than that of the main driving motor.

Since the annual sales of the hybrid passenger vehicles is higher two orders of magnitude than the annual sales of the hybrid commercial vehicles, some core components shared with the commercial vehicles are selected as far as possible, the cost of the hybrid commercial vehicles can be reduced effectively and supply in batch can be assured. The rated power of a single motor and inverter for the electric (hybrid) passenger vehicles is generally lower than 150KW. One preferred embodiment is to select a nine-phase permanent magnet AC motor and a nine-phase AC output inverter matched with the nine-phase permanent magnet AC motor. The nine-phase permanent magnet AC motor is actually formed by integrating three smaller three-phase permanent magnet AC motors in the coaxial/same shell mode, and the corresponding nine-phase inverter is formed by integrating three independent smaller inverters in the same shell. Such multi-phase motor + multi-phase controller structure has redundancy, and the comprehensive cost of the whole system can be reduced; and the performance and reliability of the system are improved. If the power parameters of the motor and the controller are beyond the above range, the hybrid heavy duty truck can also work. But the economy of the ultra-low configuration is improved but the power performance is reduced, or the power performance of the over-high configuration is improved but the economy is reduced.

For the 6x2 or 6x4 heavy duty truck hybrid system in Figure 1, a standard main driving motor 140 (MG2) arranged in front of the transmission 150 (position P2) and an auxiliary driving motor 170 (MG3) arranged at the second transmission shaft (also called the second driving axle) 180 (position P4) can also be adopted. At the moment, the main driving motor MG2 can be preferably a permanent magnet synchronous motor (three-phase or six-phase AC) with the rated power of 150KW~230KW. The auxiliary driving motor MG3 can be preferably a high-torque permanent magnet synchronous motor with the rated power of 100KW-150KW and peak torque of no more than 1000NM (Newton meter), and is connected with a single-stage speed reducer or a direct drive second rotating shaft 180. At the moment, the auxiliary inverter 122b can be a motor controller with the rated power of 150KW~200KW.

The input shaft of the transmission 150 is connected with the output shaft of the main driving motor 140 through the flexible mechanical coupler 152 bidirectionally and mechanically, and the output shaft of the transmission is connected with a first rotating shaft (also called the first driving axle) 160 bidirectionally and mechanically. Preferably, the heavy-duty automatic transmission (AMT-6-AMT-12) with the input end peak torque of higher than 2000Nm is adopted, or the heavy-duty double-clutch transmission (DCT) or the automatic transmission (AT) with a hydraulic torque converter can also be selected. Different from the dynamic characteristic that the torque is smaller at low speed of the internal combustion engine, the torque of the driving motor is the maximum at low speed, so the forward speed gears 6~8 of the automatic transmission are sufficient for the ACE heavy duty truck, and excessive gears are not required. However, the maximum power on the transmission in the invention is not the traditional one-way mechanical power transfer but two-way mechanical power transfer, so the design and manufacturing of the main bearings and gears in the automatic transmission of the ACE heavy duty truck should be strengthened, and then it can be ensured that the performance, durability and life of the automatic transmission can reach the standard.

The above descriptions are the engineering fundamentals, system architecture and hardware configuration for achieving the beneficial effects of fuel saving and emission reduction of the ACE heavy duty trucks for long haul logistics based on the ACE heavy duty truck system of the invention, In the following embodiments, the further description on how to use particularly the three-dimensional map, vehicle-mounted navigation equipment and structured big data stored on the cloud computing platform (such as the cloud server) in combination with the machine learning algorithm and cloud platform computing power for training "fuel-saving artificial intelligence"to achieve the predictive adaptive cruise of "fuel saving + artificial intelligence" of the ACE heavy duty truck in the same lane on a highway.

In some embodiments, the ACE heavy duty truck is equipped with a map unit 240 and a satellite navigation receiver 220. The map unit prestores a three-dimensional electronic map (or 3D map) covering all highways and other main semi-closed roads, while the three-dimensional map information comprises, but not limited to: the longitude and latitude of a whole journey highway, especially the priori information indicating the longitudinal road slope (such as the upslope angle $\alpha_u$ and the downslope angle $\alpha_d$ as shown in Figure 4). For example, the memory of the vehicle-mounted navigator 240 shown in Figure 1 can comprise the three-dimensional map with the road meter-level positioning precision (longitude and latitude) and longitudinal slope precision of 0.1 degree. Various advanced driver assistance system (ADAS) maps containing the above road three-dimensional information have already been commercialized and applied in batches in major global automotive markets.

The satellite navigation receiver 220 (or satellite navigator, GNSS) is used for measuring the longitude, latitude, altitude, longitudinal road slope, longitudinal linear speed and other information of the position (namely the current position) where the vehicle is located in real time. In some embodiments, the satellite navigation receiver adopting a dual-antenna input (221 and 222) carrier phase real-time kinematic (RTK) differential technology ("RTK receiver" for short) can be used for real-time accurate positioning and attitude determination of the heavy duty truck at the measuring speed of ten times per second (the measuring frequency is 10 Hz).

At present, an international navigation satellite system (GNSS) has four independent systems, namely GPS of America, Glonass of Russia, Galileo of European Union and Beidou (BD) of China. At present, the BeiDou Navigation Satellite System III (BDS-3) can provide latest satellite navigation services for Asian-Pacific regions taking China as the core as well as the countries along "One Belt and One Road", and it is predicted that the global coverage can be finished in 2020. In addition, the agreement of compatibility for the BeiDou navigation satellite system in China with other three systems has been signed. Preferably, the satellite navigation receiver 220 comprising the latest BDS-3 RTK chip is matched with the two satellite antennas 221 and 222 installed on the top of the heavy duty truck cab at the interval of at least 1m, and the time service, speed, position (longitude/latitude), and longitudinal attitude (namely road longitudinal slope angle) of the vehicle are calculated in real time. The RTK chips can finish calculation of satellite navigation positioning and attitude determination according to the received independent signals of four navigation satellites combined in the four systems of the GNSS. The timing accuracy is 50 nanoseconds, and the speed measuring accuracy is 0.2 m/s; the longitude and latitude positioning accuracy of the horizontal plane is smaller than 2.5m, and the longitudinal grade accuracy of the highway is smaller than 0.15 degree; and the maximum measuring frequency is 10 Hz. The vertical altitude of the road surface under the wheels cannot be measured through the RTK navigator real-timely and accurately. In addition, the surveying, mapping and issuing of accurate altitude information are controlled in many countries in the world strictly. Fortunately, the absolute altitude measuring accuracy of the vehicle road surface in the invention is not required to be high, i.e. sub-100-meter level. In some embodiments, the single-antenna satellite navigation receiver plus vehicle gauge level inertial measurement unit (IMU) can also be used to complete vehicle 3D positioning and navigation. The IMU based on multiple MEMS acceleration sensors and Gyro can measure the longitudinal slope function of the road where the ACE heavy duty truck runs in real time with the measurement frequency higher than 10Hz and the measurement accuracy of 0.1 degree. It needs to be emphasized that dynamic and accurate measurement of longitudinal slope distribution function along expressway is essential for ACE heavy duty truck to optimize energy management because the instantaneous small 0.1 degree-class change of road longitudinal slope is the secret source of substantial fuel saving and emission reduction when the ACE heavy duty truck is running at high speed.

The actual fuel consumption of each ACE heavy duty truck is only directly related to the performance configuration parameter constant of each important subsystem of the heavy duty truck, the discrete variable of gross vehicle weight (tractor and trailer), the two continuous time variables of vehicle speed and acceleration, the continuous time variable of longitudinal slope distribution function of driving path and other limited constants or variables, and is not directly related to the transportation industry or the annual macro average fuel consumption of vehicles. Before an ACE heavy duty truck departs for freight transport, if a default optimal fuel saving control strategy customized for the vehicle and the specific path can be timely (second-class delay) calculated and downloaded from the cloud artificial intelligence (AI) brain by entering the starting point and finishing point of the journey path that very day with the help of structured big data on operation gathering the historical experiences of all the ACE heavy duty trucks operating in this road section, then every ACE heavy duty truck can consistently achieve the optimal fuel consumption relying on the collective intelligence of ACE heavy duty trucks regardless of whether the driver has driving experience of the path.

The core of the structured big data of ACE heavy duty truck operation is the big data of ePSD operation, comprising the following: the sampling frequency is 10.0Hz, the clocks of all subsystem controllers are calibrated according to the timing of the satellite navigation receiver 220, and each microcontroller of the ACE heavy duty truck at each sampling time point $t_i$commands the sensor to collect and store at least the following variable values locally: the road longitude $L_{1g}$ ($t_i$), latitude $L_{1at}$ ($t_i$), longitudinal slope G ($t_i$), vehicle speed v ($t_i$), vehicle acceleration a ($t_i$), generator DC $I_g$ ($t_i$), driving motor DC $I_m$ ($t_i$), battery pack DC $I_{bat}$ ($t_i$), DC bus voltage $V_{bus}$ ($t_i$), battery pack state of charge $C_{bat}$ ($t_i$), brake resistor DC $I_{bk}$ ($t_i$), ambient temperature T ($t_i$), ambient wind speed and wind direction $V_{xyz}$($t_i$)and the like. The main time variable operating parameters of the motors (MG1, MG2, MG3), the engine 101 and the automatic transmission 150 at ($t_i$) moment can also be sampled and stored locally. It should be emphasized that all the structured big data of ACE heavy duty truck operation must be collected, measured and stored locally (onboard) and dynamically in real time by using the system architecture and devices shown in Figures 1, 2, and 3 of the invention. It is not possible to collect or simulate the data on more than one heavy duty truck in a decentralize way in different time, road sections and subsystems before splicing to form the desired data. A variety of open source or special machine learning algorithms and cloud platform computing power can be adopted in the subsequent training of the cloud and vehicle-mounted fuel saving artificial intelligence units. However, the structured big data of ACE heavy duty truck operation is non-public proprietary data. The more you accumulate, the greater value you get, and the entry barrier for subsequent competitors can be continuously raised.

In some embodiments, the VCU 201 is configurable for predictive power control over the ePSD, the motor and the battery pack in an "independent" way based on the longitude and latitude (equivalent meter-class positioning accuracy), the longitudinal road slope ("longitudinal slope" for short, accuracy 0.1 degree) and other data along the full journey road in the 3D map prestored in the map unit 240, and/or based on the longitude, latitude, altitude, longitudinal slope, vehicle speed and other data dynamically measured by the RTK receiver 220 of the position where the vehicle is located in pursuit of minimized actual fuel consumption of ACE heavy duty truck on the premise of ensuring driving safety and freight transport timeliness.

Optionally or additionally, under the condition that the deviation between the information prestored in the three-dimensional map in the map unit 240 and the information actually measured by the satellite navigation receiver 220 is beyond the range of allowable tolerance, especially when the deviation of the current longitudinal slope data (as key information of fuel saving) of the vehicle is beyond the range of allowable tolerance, the VCU can control the transient power distribution among the three ports of the ePSD subject to the actually measured longitudinal slope data. If in fact the RTK receiver 220 malfunctions and the priori data of the three-dimensional map is correct, the VCU 201 can make a judgment quickly after vehicle-in-the-loop (VIL) simulation calculation according to the actual transient power distribution parameters of the three ports of the ePSD of the ACE heavy duty truck, the longitudinal linear speed and acceleration of the vehicle and in combination with the vehicle dynamics equation, reelection shall be subject to the onboard 3D electronic map, so as to achieve the automatic error correction function of the system.

Of course, a common single-antenna satellite navigation receiver 220 can be selected to reduce the system cost; then, a single-axis or multi-axis dynamic tilt sensor is selected to measure the running vehicle positioning (longitude/latitude) and road longitudinal slope in real time. There are many ways to realize the dynamic tilt sensor. One of the cost-effective embodiments is the acceleration sensor of the vehicle gauge level micro-electro-mechanical system (MEMS), the Gyroscope and the special-purpose chip integration. In several embodiments below, the following is the exemplary description on how to achieve the automatic predictive fuel saving control through the VCU 201 using the vehicle dynamic 3D navigation information (especially the road longitudinal slope distribution function). It is indicated that the following specific examples should not be interpreted as restrictions on the protective range of the invention, but for those in the art to understand the invention properly.

For example, in some embodiments, when it is inferred from vehicle location and onboard 3D map that a large slope with the slope of the slope road section smaller than the predefined first longitudinal slope threshold (for example, the slope is smaller than 2.0°) and the length of the slope road section larger than the predefined first length threshold (for example, the length is larger than 10km) will be encountered ahead, the internal combustion engine 101 can be commanded through the VCU 201 to drive the alternator 110, the generated power is increased in advance; most of the generated electric energy is used for supplying power for the driving motor 140 to provide the power for vehicle to run at constant speed, the residual electric energy is used for charging the battery packs 130a and 130b, and the battery shall be fully charged before the vehicle starts to climb a large slope as far as possible. It is especially suitable for the scenarios that the road section in front of the vehicle has a "longer gentle slope".

In some embodiments, when there are basically plain roads within the electronic horizon of the vehicle without a large slope and there are only various small slopes with the slope smaller than the predefined second slope threshold (e.g., less than 2.0°) and the length of the slope road section smaller than the predefined second length threshold (e.g., less than 2 km), the internal combustion engine can be commanded through the VCU 201 to switch to the idle point to work; at the moment, the output power of the generator is zero, the driving motor 140 is powered only through the battery pack 130a and/or 130b in the form of charge consumption to provide the power required for the vehicle to run at constant speed. It is especially suitable for the scenarios that the road section in front of the vehicle has a "shorter slope" (also called "small slope"). Since the slope length is shorter (for example, the slope length is smaller than 2km), the vehicle has climbed to the top of the slope before the release of the stored electric energy in the battery pack 130a and 130b is finished; and the battery pack can be soon recharged through regenerative braking of the driving motor in the subsequent downhill phase, and the energy is recovered. In this way, the electric energy in the power type battery pack of dozens of KWH class is fully utilized and charged and discharged for many times, so that the power throughput turnover is increased, and the cost effectiveness is higher than that of the solution of using a high-capacity battery pack of hundreds of kilowatt hours to prestore a lot of electric energy.

As mentioned above, the inventor finds that, depending on the ten-kilometer level electronic horizon of the vehicle-mounted three-dimensional map, fuel saving strategies for existing traditional fuel heavy duty trucks can save fuel by 3% or below through the predictive cruise control. However, the predictive cruise strategies of the traditional heavy duty truck cannot be applied to such conditions that the length of the slope road section is shorter and the slope is smaller, namely the conditions of "small slope" (for example, the length of the slope road section is smaller 2km and the longitudinal slope is smaller than 2.0 degrees). This is mainly because the mechanical connection is still maintained between the internal combustion engine and the rotating shaft of the traditional fuel heavy duty truck, and the mechanical power assembly is inappropriate to change the output power of the internal combustion engine greatly and instantaneously (sub-second level) and shift gears of the automatic transmission (second level). Thus, the traditional predictive cruise control is only suitable for the called "large slope" with the longitudinal slope of larger 2.0 degrees and the slope length of the several-kilometer level, but ignores more "small slopes". In addition, the traditional fuel heavy duty truck has no regenerative braking function, and the energy cannot be recovered as the vehicle runs downhill. In this way, the traditional fuel heavy duty truck implements predictive power control in long haul logistics scenarios, and will lose lots of chances of accumulative micro fuel saving; and the overall fuel consumption drop of the traditional fuel heavy duty truck is hard to exceed 3%. As mentioned above, a traditional fuel heavy duty truck can use the electronic horizon within about 10km only. The electronic horizon within the range of smaller than 1km and larger 10km has no practical significance to the fuel saving through predictive control.

In some embodiments, when the slop of a road section in front of the vehicle is basically zero (the longitudinal slope $\alpha$ is within $\pm 1.0°$) in a quite long distance (such as 10 km) or only the above "small slope" exists, the VCU can take the state of charge (SOC) of the battery pack into consideration dynamically. For example, when the SOC of the battery pack higher than the first charge threshold (e.g., SOC is higher than 80%) is detected, the output power $P_1$ of the generator set can be reduced and even reduced to zero, and the driving motor can be mainly powered by the discharge power $P_2$ of the battery pack to supply vehicle running power. If the SOC of the battery pack lower than the second charge threshold (e.g., SOC is lower than 20%) is detected, the output power $P_1$ of the generator set should be adjusted high until its peak $P_{gx}$ is reached, and the main electric energy generated should be used to supply power to the driving motor (140 and/or 170) to drive the vehicle, and the remaining electric energy generated should be used to charge the battery pack (130a and/or 130b). In this way, ensure the electric quantity in the battery pack would not be used up, and some electric quantity is always stored to supply explosive power required for vehicle acceleration or running uphill at constant speed .

In some embodiments, when a "long slope" with the slope larger than the first slope threshold (e.g., the slope is larger than 2.0°) and the slope length larger than 10 km appears in the front road section away from the predetermined distance (e.g., the front position of 10 km above) from the current position of the vehicle, the VCU can command the generator set to generate electricity with the maximum power $P_{gx}$ in advance, and use a part of the electric energy generated to drive the motor to supply vehicle power, and use the remaining part of the electric energy generated to charge the battery pack basically so that the battery pack is fully charged (SOC=100%) when the vehicle runs to the start point of the road section with this "long steep slope". In this way, the battery pack can supply power to the driving motor with the generator set through the ePSD in the working mode of charge depleting after the vehicle enters a long slope section, so as to meet the requirements of vehicle driving power and freight timeliness. When the remaining electric energy of the battery pack is sufficient to drive the vehicle to the top of slope, the VCU commands the generator set to reduce to zero output in advance, uses up the electric energy in the battery pack basically where the vehicle runs downhill, and then quickly charges the battery pack through regenerative braking by means of hundreds of kilowatts of negative grade power in long downhill, thus achieving fuel saving.

With reference to Figure 1, in view of driving safety, in some embodiments, the heavy duty truck can further comprise an automotive millimeter-wave radar module 230 and an radar antenna 231 that are mounted in the front end of the heavy duty truck, used for monitoring the distance and the relative speed between the heavy duty truck and its front following vehicle in real time. The forward detection distance peak range of the millimeter wave radar is 100m~300m. The vehicle gauge level forward monocular or binocular camera and a special chip can also be used for integrating with the forward millimeter wave radar to enhance the front-end speed and distance measurement properties of the vehicle and the system robustness.

In some embodiments, the heavy duty truck can further comprise a vehicle-mounted wireless communication module (T-box) 210, used for connecting the heavy duty truck with a cloud computing platform 001 through for example WiFi and the 3rd/4th/5th generation cellular mobile network (3G/4G/5G) 002 (see Figure 4).

In this way, the VCU 201 can receive signals from numerous vehicle sensors including the RTK receiver 220 and the millimeter wave radar 230 for real-time control of numerous modules or subsystems including the engine 101, the engine control module 102, the alternator 110, the ePSD 123 (including the inverters 121, 122a and 122b, the high power soft switch 133, the choppers 132a and 132b), the battery packs 130a and 130b, the driving motors 140 and 170, the automatic transmission 150 plus the controller (TCU) 151 and the map unit 240, thus achieving the Predicative-Adaptive-Cruise function of the vehicle in the same highway lane through the "symphony orchestra type" multi-module coordination and ensuring the minimized comprehensive fuel consumption.

The VCU can achieve minimized comprehensive fuel consumption for the whole journey by making use of electronic horizon three-dimensional road information within 50 km and even 500 km effectively, and through the granularity real-time predictive power control for an accumulative 50 m road section.

In addition, the additional Predicative-Adaptive-Cruise (PAC) function, also called the L1.5 levelautomatic drive function, can also be manually turned on or off when the ACE heavy duty truck is running on a closed expressway. This function (PAC) used for automatic control of longitudinal vehicle driving on the same lane relaxes driver's feet, alleviates the driving labor intensity, and achieves automatic acceleration, deceleration, cruise and slide of the ACE heavy duty truck in the same highway lane.

In some embodiments, the above PAC can comprise the following three modes: normal mode, fuel-saving mode and high-performance mode (also called sport mode).

For example, for a mid-class passenger vehicle with the gross weight of 2 tons, its maximum driving power is 100KW; but for a full load heavy duty truck with the gross weight up to 40 tons, its maximum driving power is only 350KW. The driving power per ton weight of the heavy duty truck is far less than that of the passenger vehicle, and the dynamic driving characteristics of the two vehicles are quite different. It is difficult for a heavy duty truck to go up and down a long slope while keeping constant speed and follow the passenger vehicle straight ahead with a constant distance when running on an open highway due to huge inertia and insufficient driving power margin. It needs to set the upper and lower limits of cruise speed and determine the cruise speed zone of the heavy duty truck to control the vehicle within the cruise speed zone with the cruise speed Vc selected by drivers as an intermediate value. The three PAC modes have different focuses, wherein, the normal mode gives consideration to fuel consumption and power performance (i.e. freight timeliness); the fuel-saving mode emphasizes fuel consumption but relaxes the power performance requirement; the high-performance mode emphasizes power performance but relaxes the fuel consumption requirement. Preferably, the upper and lower limits of the following cruise speed zones can be selected.

In the normal mode, the cruise speed $(1.0-0.08)$ Vc$<V(t)<$ $(1.0+0.08)$ Vc and/or the legal maximum speed at this section; in the fuel-saving mode, the cruise speed $(1.0-0.15)$ Vc$< V(t) <$ $(1.0+0.05)$ Vc and/or legal maximum speed; in the high-performance mode, the cruise speed $(1.0-0.05)$ Vc$< V(t) <$ $(1.0+0.12)$ Vc and/or the legal maximum speed at this section.

The VCU dynamically adjusts the safe following distance Ls of adaptive cruise control according to the vehicle configuration and state information including the gross weight and vehicle speed, and combining with the current longitudinal slope information of the vehicle as well as the longitudinal slope distribution function, bend curvature and other three-dimensional information of ten kilometers of roads in front of the vehicle stored in the navigator. The road longitudinal slope data (positive and negative/size) has a great influence on the power performance and braking effectiveness of heavy duty trucks. It is not necessary for passenger vehicles to dynamically adjust the safe following distance $L_s$ according to the road longitudinal slope distribution function, but this is very important for the safe driving of heavy duty trucks. The safe following distance $L_s$ can be subdivided into three specific distances: L1 is the early warning distance, L2 is the warning distance, L3 is the dangerous distance, where L1 > L2 > L3.

When the distance $L_s$ between an ACE heavy duty truck and a vehicle right ahead is gradually less than LI, L2 and L3 and the relative speed v>0 (indicating the continuous shortening of vehicle spacing), the VCU will remind drivers by enhancing the warning intensity gradually through internal acoustic, visual, tactile and other signals. At the same time, the VCU controls the generator set and the driving motor to reduce their output power gradually, and then increases the regenerative braking power gradually to slow down the vehicle after the output power of the driving motor reduces to zero, and recover energy by charging the battery pack. However, the 500 KW maximum regenerative braking power of the driving motor can only meet the auxiliary braking requirement with a deceleration of about 0.1 g (g is acceleration of gravity) for a full load heavy duty truck running at high speed. In emergencies, the driver must step on the brake and start the mechanical braking system of the heavy duty truck to achieve emergency braking with deceleration larger than 0.2 g. There is a delay of about 1.0 second between the driver's braking reaction time and the response time of the heavy duty truck mechanical braking (pneumatic braking) system. However, the above operation of the VCU can be completed in 25.0 ms, dozens of times faster than the response speed of the traditional heavy duty truck driver + mechanical braking system, and the regenerative braking system and the mechanical braking system are completely independent of each other. The regenerative braking function of the driving motor of ACE heavy duty truck not only improves the comprehensive braking performance of the vehicle, but also provides safety redundancy. In addition to fuel saving and emission reduction, the PAC of the ACE heavy duty truck can improve driving safety and reduce rear-end collisions.

Predictive adaptive cruise (PAC) work is divided into two categories. The first one is that when there is no vehicle within several hundred meters ahead in the same lane, the vehicle controls the ACE heavy duty truck to move within the specified speed zone according to the fuel saving control algorithm. The second category is that the ACE heavy duty truck should be controlled beyond the safe following distance $L_s$ when there are preceding vehicles 200 meters right ahead in the same lane.

Heavy duty trucks for long haul logistics will encounter congested roads due to rush hour traffic, road repairing or traffic accidents and other factors from time to time (the average speed is less than 30 km/h; frequent acceleration and deceleration); at the moment, both the driver's driving labor intensity and the fuel consumption of the heavy duty truck are increased sharply. Congested expressways are one of the "pain points" in the road logistics industry for various countries in the world. The average congestion degree of highways in China is higher than that in America. At the moment, the ACE heavy duty truck can enable the "intelligent following" function, which can only be used when driving at low speed on a closed road (the average speed is less than 30 km/h), and cannot be used on open urban or suburban roads. By using the forward looking radar and the camera, a set safety distance L0 is kept with the lead vehicle right ahead in the same lane in a closed congested highway section, which is realized by commanding the powertrain of the ACE heavy duty truck to make frequent acceleration and deceleration through the VCU. The driving motor can maintain the maximum torque output from zero speed to rated speed. Both the starting acceleration and braking deceleration of the ACE heavy duty truck are significantly higher than those of the traditional heavy duty truck with internal combustion engine and comparable with the acceleration and deceleration of the traditional ordinary passenger vehicle with internal combustion engine. At the moment, the heavy duty truck frequently brakes at low speed, which is very conducive to the 100 kW-class regenerative braking and energy recovery. In the "intelligent following" mode on congested roads, the ACE heavy duty truck can save more fuel than the traditional heavy duty truck with internal combustion engine (the fuel saving rate is more than 30%) and greatly reduce the driving labor intensity of drivers.

When a loaded heavy duty truck runs along a long-downhill path of a highway, the risk of performance degradation in the mechanical brake system due to long-time braking and heating, or even complete failure, cannot be overlooked. European heavy duty truck regulations require that heavy duty truck retarders must be installed. Although there is no mandatory regulation requirement for heavy duty trucks in America and China, more and more heavy duty trucks are equipped with heavy duty truck retarders (optional). The existing mass-produced retarders, such as eddy current retarder, hydraulic retarder and engine in-cylinder brake retarder, have their own advantages and disadvantages. Both the eddy current retarder and the hydraulic retarder have only one retarding function, which makes no contribution to vehicle driving, increases the vehicle weight and cost, and leads to a bad retarding effect when the vehicle is running at low speed. The engine in-cylinder brake retarder has the advantage of one machine serving several purposes, but in-cylinder braking brings great noise pollution, and the retarding effect decreases when the vehicle is running at low speed. In addition to fuel saving, the ACE heavy duty truck powertrain of the invention can also serve several purposes with one machine; at the same time, the ACE heavy duty truck powertrain realizes the retarding function of the heavy duty truck without additional cost, and the cost effectiveness is higher than that of the above several retarder products of heavy duty trucks which have been put into mass commercial use. When the ACE heavy duty truck encounters a long-downhill path, the VCU201 commands the ePSD123 to shut down the engine 101 first, and the battery pack 130a and/or 130b is charged through regenerative braking of the driving motor 140 and/or 170. When the battery packs 130a and 130b are fully charged (SoC is 100%), the soft switch 133 is switched to the brake resistor 131, the battery packs are disconnected, and the excess electric energy is converted into thermal energy consumption. If the engine 101 has the function of in-cylinder braking at the moment, the generator 110 can also be driven through the inverter 121, the engine is dragged to consume excess electric energy by in-cylinder braking, and the retarder system redundancy is provided. In addition to energy recovery at near zero cost, the regenerative braking can also significantly prolong the life of mechanical brake pads and significantly reduce the operation and maintenance costs of the ACE heavy duty truck braking system.

The ACE heavy duty truck system architecture of the invention can comprise the L1~L2 conditional automatic driving function, and the powertrain architecture is an all-digital software defined powertrain. The ACE heavy duty truck can be upgraded to the L4 or L5 unmanned heavy duty truck. All automatic driving heavy duty trucks of L1 to L5 must comply with the functional safety standard ISO 26262 for road vehicles to achieve a specific safety level (ASIL safety level). The ACE heavy duty truck has the regenerative braking function based on the driving motor and the ePSD, the automatic emergency brake assist function (AEBA), and the long-downhill retarder function. Besides the traditional mechanical braking system of the vehicle, a set of completely independent and redundant active safety system is added. The ACE heavy duty truck system architecture of the invention can improve the three ultimate goals of automobiles simultaneously: safety, energy saving and environmental protection.

It is predicted that the preliminary large-scale business of "Truck Platooning" of heavy duty truck can be implemented in relatively open closed highway areas in Europe and America in 2019. The "Truck Platooning" of heavy duty truck means reducing the safe following distance between two heavy duty trucks running at high speed from the regulatory 50m above to 15 m below greatly through a complete set of advanced driving assistant system (ADAS) + a real-time reliable communication (V2V, V2X) between vehicles as well as between the vehicle and cloud, which helps to reduce the air drag power between the front and rear vehicles obviously, save 4% fuel of the leading heavy duty truck and save 10% fuel of the following heavy duty truck. In view of safety, the emergency braking performance of the following heavy duty truck should be superior to the leading heavy duty truck, so as to avoid rear-end collisions. The high speed emergency braking performance in the same lane of the ACE heavy duty truck is always superior to traditional fuel heavy duty truck with the same load, therefore the ACE heavy duty truck is applicable for serving as following heavy duty truck in the truck platooning of heavy duty truck, which can further save fuel. In view of fuel saving, smaller following distance in truck platooning is not better. When the following distance is less than 7 m, the effective wind speed of the front water tank of the following heavy duty truck will be reduced; and at the moment, it is required to start the water tank fan with power dissipation of tens of kilowatts to provide the dynamic heat dissipation power required for the heavy duty truck diesel engine, which results in no reduction and rise of comprehensive fuel consumption of the following heavy duty truck. The diesel engine displacement of the ACE heavy duty truck is reduced by about 30% than the engine displacement of the traditional heavy duty truck, which means both area and heat dissipation power of its water tank are reduced by about 30%; and compared with traditional heavy duty truck, the ACE heavy duty truck has faster braking response, higher total braking power and shorter braking distance. Therefore, served as a following vehicle, the ACE heavy duty truck can shorten the safe following distance of a truck platooning to 6 m in an expressway section without significantly going uphill and downhill, and may achieve more than 10% fuel saving rate by reducing the air drag power.

It needs to be emphasized that the realization of reduced 30% comprehensive fuel consumption of the ACE heavy duty truck than traditional heavy fuel truck through the PAC in the same highway lane described in the invention mainly depends on the gas-electric hybrid powertrain technology, plus the proprietary structured big data, 3D map electronic horizon, and artificial intelligence fuel saving algorithm. Different from the L4/L5 automatic drive vehicles which are still in the research and development stage, the ACE heavy duty truck of the invention uses the mature and commercial core components and system integration technology, and the ACE heavy duty truck can be implemented within five years to realize large-scale commercial use. Other commercialized fuel saving technologies for heavy duty trucks, such as low rolling friction tires, lightweight and wind drag reducing aerodynamics (tractor and trailer) and the like, can be directly superposition-applied to ACE heavy duty trucks, therefore compared with 2015 edition of traditional fuel heavy duty truck, the commercial ACE heavy duty truck around 2021 can reduce by more than 30% reference comprehensive fuel consumption.

Besides, for an ACE heavy duty truck with battery pack capacity of only dozens of kilowatts, more than 1000 degrees (KWH) of power are consumed for high-speed loaded running for 800 km, the plug-in hybrid function is technologically feasible but doesn't make much business sense. The invention is substantially an advanced extended-range electric heavy duty truck without plug-in function. As discussed above, when running on a loaded highway, the ACE heavy duty truck can harvest kilowatt-hours of "zero cost electric energy" from each downhill between tens of meters and several kilometers through charging the battery pack by skillfully using the grade power with downhill negatives between tens of kilowatts and hundreds of kilowatts generated from subtle second level fast change with longitudinal slope 0.1° that frequently occurs. Every little helps. The comprehensive energy conversion efficiency from the battery to the driving wheel is as two times as that from the fuel tank to the driving wheel. In other words, compared with the fuel chemical energy in the fuel tank, the electric energy in the battery pack can make one to three in the aspect of vehicle driving. The secret of the ACE heavy duty truck saving fuel under the working condition of highways is to maximize the approximately zero cost electric energy in the battery pack, supply the driving power of fast change of partial vehicles, and increase the total charging and discharging electric energy of the whole journey of the battery pack through the fast turn around method of discharging with charging, so as to achieve the fuel saving effect.

The VCU considers the situation in real time according to the three-dimensional map electronic horizon of the whole journey road, so as to ensure the battery pack can be fully charged in advance with enough time before the vehicle meets a big and long slope with length of kilometers above, and avoid the peak power of the generator set is insufficient to independently support the vehicle to run uphill at constant speed after the battery pack is used up in the vehicle climbing process. According to the vehicle-mounted three-dimensional map, especially the high precision distribution information of longitudinal slope in the whole journey, the VCU can real-timely (sub-second level) and dynamically calculate and predict the vehicle grade power time function in the whole journey under the 10-kilowatt level precision, so as to dynamically and predictively adjust the operating point of the internal combustion engine and the SoC of the battery pack, and pursue the optimal balance among the fuel saving effect, power and freight timeliness of the ACE heavy duty truck at the predictive adaptive cruise (PAC) mode selected by drivers. It needs to be emphasized that the optimal value of the daily driving comprehensive fuel consumption of an ACE heavy duty truck is closely related to the configuration and load of this vehicle, longitudinal slope space-time function along the way of the specific journey (or route), weather conditions along the way on that day, traffic condition along the way, etc., but has no relation with the macroscopic average fuel consumption value of the heavy duty trucks with similar configuration and load in the whole province and even throughout the country. If the daily average fuel consumption per road section is the minimum, it can ensure the comprehensive fuel consumption of this ACE heavy duty truck is optimal within the full life cycle from month to month. For all ACE heavy duty trucks with different configurations and loads, the dedicated structured big data in a specific journey that are formed from month to month have guiding significance for each ACE heavy duty truck that is operated in this journey.

How to upload the dedicated structured big data that are recorded in the above numerous ACE heavy duty trucks during the driving period to the cloud computing platform for storage via a mobile Internet through a vehicle-mounted wireless gateway after encryption for subsequent analysis and processing is described below. The cloud platform assembles enough computing power through the specific algorithm of machine learning, trains the "fuel-saving artificial intelligence" through the increasingly accumulated dedicated structured big data, seeks the optimal fuel-saving strategy for specific journeys by focusing on collective intelligence, and serves for individual ACE heavy duty trucks, providing fuel consumption reference value and default optimal fuel-saving strategy for specific journeys for them so that each ACE heavy duty truck can benefit from them. Each heavy duty truck performs "edge computing" by means of its VCU, and real-timely and dynamically modifies the fuel-saving strategy according to the current environment and vehicle operating data, achieving minimized comprehensive fuel consumption of this journey.

In some embodiments, the operating data from the above generator set, ePSD, driving motor, automatic transmission, battery pack and other main powertrain subsystems may be measured and collected by the vehicle-mounted "IOT" consisting of numerous sensors on the ACE heavy duty truck in real time during vehicle running, and stored in for example the VCU memory as structured big data. Of course, it is also feasible to store the measurement data in the memorizers of microprocessors corresponding to subsystems in a distributed way. The "structured data" refers to multiple data that are "relatively" recorded through a "mapping relation".

For example, it can dynamically calibrate microprocessor clocks of all vehicle-mounted subsystems including the VCU clock by means of 10-nanosecond level ultrahigh precision time service of the global navigation satellite system (GNSS), and annotate the structured big data with the unique time series. As shown in Figures 1-3, all important subsystems on the vehicle, including the VCU201, the engine 101 of the generator set, the engine control module 102, the generator 110, the electrical power split device (ePSD) 123 (including the inverters 121, 122a and 122b; the soft switch 133; the choppers 132a and 132b), the driving motors 140 and 170, the battery pack 130a and 130b, the transmission 150, the transmission controller 151, the millimeter wave radar 230, the mobile communication module 210, the map unit 240, the RTK receiver 220, etc. have dedicated microprocessors, memorizers and sensors. All these subsystems can measure, calculate and record their main operating parameters annotated with time in real time locally within a measurement frequency ($f_m$) range of 0.1 Hz<$f_m$<50 Hz. For example, the engine control module 102 can calculate and record the operating data such as vehicle speed and speed, torque and brake specific fuel consumption (BSFC) of the engine 101 with a measurement frequency of 20 Hz; the generator control unit (inverter) 121 can record the data such as input shaft mechanical speed and torque and internal temperature of the alternator 110 and output DC voltage, current and internal temperature of the generator inverter 121 with a measurement frequency of 20 Hz; the ePSD 123 can record the data such as the unique DC voltage function at the DC bus junction X and the DC function of each branch circuit with a measurement frequency of 20 Hz; the battery management module (BMS) of battery packs 130a and 130b can record data such as its output DC voltage and current, and current, voltage, temperature and SoC of its internal cell and battery module levels with a measurement frequency of 10.0 Hz; the inverters 122a and 122b can record the data such as output shaft mechanical speed and torque and internal temperature of the driving motors 140 and 170 and input DC voltage, current and internal temperature of the inverters 122a and 122b with a measurement frequency of 20 Hz; the TCU 151 can record the data such as transmission position, input shaft speed and output shaft speed with a measurement frequency of above 1.0 Hz; the RTK navigator 220 can record the data such as speed per hour, longitude and latitude, longitudinal slope and time service of the vehicle with the maximum measurement frequency of 10 Hz; the millimeter wave radar 230 can record the data such as distance and relative speed between the vehicle and the front vehicle with a measurement frequency of 10 Hz. The sensor measurement parameters of subsystems may have overlapping each other, and data overlapping redundancy helps to improve the fault tolerance and error correction of the whole system.

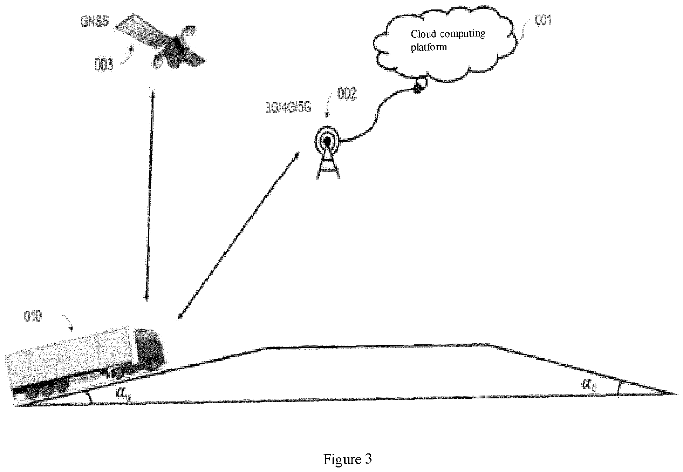

Next, as shown in Figure 3, the VCU201 collects and assembles the dedicated structured big data ("fuel saving data packet"for short) related to the vehicle fuel saving of ACE heavy duty trucks that is generated in the running process of the ACE heavy duty truck 010 with the time annotation as the reference of all subsystem measurement data.

Later, the "fuel saving data packet" will be "real-timely" (subsecond-level delay) or "timely" (hour-level delay) uploaded to the cloud computing platform 001 for centralized or distributed storage via a mobile Internet 002 or wired Internet, for subsequent analysis and processing.

For example, the data packet can be "quasi real-timely" uploaded to the server of the cloud computing platform 001 via the wireless communication module 210 (as shown in Figure 1) and the 3G/4G/5G cellular mobile network 002 (as shown in Figure 3) for subsequent data processing. The "quasi real-time" indicates that the delay of uploading the fuel saving data packet is within several hours. Electively, the data packet can be encrypted before being uploaded to ensure data privacy and security. The cloud platform 001 will collect all fuel saving data packets of numerous ACE heavy duty trucks using the invention. The cloud platform trains the artificial intelligence (AI) brain ("fuel-saving AI brain"for short) of the "fuel saving robot" by means of these increasingly accumulated structured big data of ACE heavy duty trucks and through the specific algorithm of machine learning, and seeks the optimal fuel-saving control strategy and effect of ACE heavy duty trucks. The fuel-saving AI brain can perform hundreds of millions of operations in several subseconds according to the constantly changed running conditions of the ACE heavy duty truck, seek a dynamically optimal fuel-saving control strategy in each second and minute of time frame (corresponding to 20 m to thousands of meters of driving distance), command the ePSD 123 to dynamically adjust the charging and discharging power of the battery packs (130a and 130b) with an amplitude of hundreds of kilowatts within tens of milliseconds of system response time for peak load shifting, keep the ICE of the generator set working stably at the high efficiency point for a long time, and meet the constantly changing vehicle road load power requirement $P_g+P_b=P_m=P_v$ in real time. The fuel-saving AI brain finally achieves the macroscopically optimal fuel saving effect of the whole journey through the microcosmically optimal fuel saving in each minute of time frame and constant accumulation. The vehicle-mounted fuel-saving AI brain commands the ACE heavy duty truck in the same highway lane to achieve the optimal fuel saving effect through predictive adaptive cruise (PAC), and this problem is mathematically equivalent to AlphaGo of Google. There should be no suspense that the ACE heavy duty truck"fuel saving robot" of the invention surpasses the human drivers in fuel saving of the heavy duty truck.

It should also be emphasized that the "fuel saving robot" of the invention will be a good assistant of the heavy duty truck driver in long haul logistics rather than completely replacing the human driver. Both the starting point and finishing point of the journey for the heavy duty truck in long haul logistics are known in advance. Before start of freight, the VCU 201 of the ACE heavy duty truck 010 can automatically require the "fuel-saving AI brain" of the cloud platform 001 to download the optimal fuel-saving control default program and optimal fuel consumption value (L/100 km) for a journey, to serve as a reference for locally real-time operation (edge computing) of the vehicle-mounted fuel-saving AI brain included in the VCU. In this way, we can enjoy the collective intelligence of running in the same road section of ACE heavy duty trucks in the whole industry, so as to achieve the optimal fuel saving effect. After driving the ACE heavy duty truck to a closed highway, drivers can select mode (normal mode/fuel-saving mode and sport mode), activate the PAC function, and replace partial driving functions of drivers with the fuel-saving AI brain of the VCU, so as to achieve drive (acceleration/cruise/slide/deceleration) automation in the same lane of the ACE heavy duty truck, relax driver's feet, reduce the driving fatigue strength of drivers, and achieve the optimal fuel saving effect. Drivers are still responsible for turning and emergency braking of the vehicle and for keeping all-around monitoring on driving of the heavy duty truck constantly. The other beneficial effect of the intention is that the industrial pain point of the actual comprehensive fuel consumption discreteness up to 25% of the vehicle caused due to human factors of heavy duty drivers is eliminated through the control of fuel-saving AI brain, so as to ensure all ACE heavy duty trucks can highly and uniformly achieve the optimal fuel saving effect when running on the same road section. This highlight is very important to transport companies as well.

In a word, the essential difference between the ACE heavy duty truck with PAC function in the invention and other hybrid vehicles and traditional heavy duty diesel trucks with similar technical features lies in, the former highly focuses on comprehensive fuel saving under expressway conditions, can effectively solve the worldwide problem of no obvious fuel saving effect of hybrid heavy duty trucks under the working condition of highways than traditional fuel heavy duty trucks that is recognized in the automobile industry, and can achieve the beneficial effect that the actual comprehensive fuel consumption in long haul logistics is reduced by more than 30% and the vehicle exhaust pollutant and carbon emissions are reduced greatly for a long life; The ACE heavy duty truck can also achieve the beneficial effects of improving the braking performance of the vehicle, providing the retarder function on a long-downhill path, and improving the active safety of the vehicle. The structural features, devices and methods of the ACE heavy duty truck described in the invention are also applicable to ACE motor buses for long-distance passenger transport.

Although the language specific to structural features and/or method logical actions has been used to describe the topic, it should understand that the restricted topic in the claims may not be restricted to the above specific characteristics or actions described. On the contrary, the above specific characteristics and actions described are only example forms of achieving the claims.

**Claims**

1. An electrical Power Split Device (ePSD) used for an Automated-Connected-Electrified (ACE) heavy duty truck, wherein the ePSD is configured as a power electronic network with three ports, each port has at least one unidirectional or bidirectional electrical connection to outside, wherein,

   a first port of the ePSD is configured to be electrically connected with an output end of a generator set of the ACE heavy duty truck unidirectionally or bidirectionally, the generator set is used for converting chemical energy of vehicle fuel into electric energy, the generator set is configurable as an AC generator set comprising an electric generator and an internal combustion engine that is mechanically connected with the generoator bidirectionally, and outputting alternating current bidirectionally, or the generator set is configurable as a DC generator set comprising a hydrogen fuel cell and outputting direct current unidirectionally;
   a third port of the ePSD is configured to be DC-electrically connected with at least one power battery pack of the ACE heavy duty truck bidirectionally; and
   a second port of the ePSD is configured to be AC-electrically connected with at least one driving motor of the ACE heavy duty truck bidirectionally, the output shaft of a main driving motor in the at least one driving motor is mechanically connected with an input shaft of an automatic transmission bidirectionally , wherein the at least one driving motor is operable for:

   - converting electric energy into mechanical energy to drive the ACE heavy duty truck via the automatic transmission; or
   - converting mechanical energy of the ACE heavy duty truck into electric energy and charging the at least one power battery pack via the ePSD, to achieve regenerative braking and energy recovery.

2. The ePSD according to Claim 1, wherein

   the first port is configurable to be connected with a bidirectional AC-DC converter, one end of the AC-DC converter is AC-electrically connected with the output end of the AC generator set bidirectionally to control the generator in the generator set, the other end of the AC-DC converter is DC-electrically connected with a DC bus junction of the ePSD bidirectionally, or the first port is configured to be connected with a unidirectional DC-DC converter, one end of the DC-DC converter is DC-electrically connected with the output end of the DC generator set unidirectionally to control the DC generator set, and the other end of the DC-DC converter is DC-electrically connected with the DC bus junction of the ePSD unidirectionally; and
   the second port is further configured to be connected with at least one bidirectional DC-AC converter, one end of the at least one DC-AC converter is AC-electrically connected with the at least one driving motor bidirectionally to control the at least one driving motor, and the other end of the at least one DC-AC converter is DC-electrically connected with the DC bus junction bidirectionally.

3. The ePSD according to Claim 1, wherein

   the third port is further configured to be connected with at least one bidirectional DC-DC converter, and the at least one DC-DC converter is DC-electrically connected with the at least one power battery pack bidirectionally; and
   the third port is further configured to include a three-terminal soft switch, a first terminal of the three-terminal soft switch is DC-electrically connected with the DC bus junction bidirectionally, a second terminal of the three-terminal soft switch is DC-electrically connected with the at least one DC-DC converter bidirectionally, and a third terminal of the three-terminal soft switch is DC-electrically connected to a brake resistor of the ACE heavy duty truck unidirectionally,
   wherein the brake resistor is configured for converting regenerative electric energy into heat energy to be dissipated, to function as a retarder of the ACE heavy duty truck.

4. The ePSD according to any one of Claims 1-3, further equipped with a plurality of sensors, wherein the plurality of sensors are configured for sensing and outputting in real time one unique dynamic DC voltage or a plurality of dynamic DC currents at the DC bus junction.

5. An Automated-Connected-Electrified (ACE) heavy duty truck, comprising

   a generator set, used for converting chemical energy of vehicle fuel into electric energy, the generator set is configurable as an AC generator set comprising an electric generator and an internal combustion engine that is mechanically connected with the generator bidirectionally, and outputting alternating current bidirectionally, or the generator set is configurable as a DC generator set comprising a hydrogen fuel cell and outputting direct current unidirectionally;

an electrical Power Split Device (ePSD), configured as a power electronic network with three ports, each port has at least one unidirectional or bidirectional electrical connection to outside, wherein a first port of the ePSD is DC-electrically connected with an output end of the generator set unidirectionally or AC- electrically connected with the output end of the generator set bidirectionally;

at least one power battery pack, DC-electrically connected with a third port of the ePSD bidirectionally ; an automatic transmission, with its input shaft mechanically connected with an output shaft of a main driving motor of the ACE heavy duty truck bidirectionally; and

at least one driving motor, AC-electrically connected with a second port of the ePSD bidirectionally, the output shaft of the main driving motor in the at least one driving motor is mechanically connected with an input shaft of the automatic transmission bidirectionally, the output shaft of an optional auxiliary driving motor is mechanically connected with an optional auxiliary driving shaft of the ACE heavy duty truck bidirectionally, wherein the at least one driving motor is operable for:

- converting electric energy from the generator set and/or the battery pack into mechanical energy to drive the ACE heavy duty truck via the automatic transmission, or
- converting mechanical energy of the ACE heavy duty truck into electric energy and charging the at least one power battery pack via the ePSD to achieve regenerative braking and energy recovery;

wherein the generator set is not connected with either the at least one driving motor or the automatic transmission directly and mechanically.

6. The ACE heavy duty truck according to Claim 5, wherein

the first port of the ePSD is configurable to be connected with a bidirectional AC-DC converter, one end of the AC-DC converter is AC-electrically connected with the output end of the AC generator set bidirectionally to control the generator in the AC generator set, the other end of the AC-DC converter is DC-electrically connected with the DC bus junction of the ePSD bidirectionally, or the first port is configurable to be connected with a unidirectional DC-DC converter, one end of the DC-DC converter is DC-electrically connected with the output end of the DC generator set unidirectionally to control the DC generator set, and the other end of the DC-DC converter is DC-electrically connected with the DC bus junction of the ePSD unidirectionally; and

the second port of the ePSD is further configured to be connected with at least one bidirectional DC-AC converter, one end of the at least one DC-AC converter is AC-electrically connected with the at least one driving motor bidirectionally to control the at least one driving motor, and the other end of the at least one DC-AC converter is DC-electrically connected with the DC bus junction bidirectionally.

7. The ACE heavy duty truck according to Claim 6, wherein

the third port is further configured to be connected with at least one bidirectional DC-DC converter, one end of the at least one DC-DC converter is DC-electrically connected with the at least one power battery pack bidirectionally, and the other end of the DC-DC converter is DC-electrically connected with the DC bus junction bidirectionally; and

the third port is further configured to include a three-terminal soft switch, a first terminal of the three-terminal soft switch is DC-electrically connected with the DC bus junction bidirectionally, a second terminal of the three-terminal soft switch is DC-electrically connected with the at least one DC-DC converter bidirectionally, and a third terminal of the three-terminal soft switch is DC-electrically connected to a brake resistor of the ACE heavy duty truck unidirectionally;

wherein the brake resistor is configured for converting regenerative electric energy into heat energy to be dissipated, to function as a retarder of the ACE heavy duty truck.

8. The ACE heavy duty truck according to any of Claims 5-7, further comprising

a map unit , used for previously storing a three-dimensional electronic navigation map comprising three-dimensional information including longitude, latitude and longitudinal grade of each road section of a driving route that the ACE heavy duty truck is going to follow; and

a satellite navigator, capable of detecting in real time a real-time longitude, a real-time latitude and a real-time road longitudinal grade of the road section where the ACE heavy duty truck is running.

9. The ACE heavy duty truck according to any of Claims 5-7, further comprising a sensor selected from at least one type of a millimeter wave radar, a laser radar and a camera, configured for detecting in real time distance and relative speed between the ACE heavy duty truck and another vehicle ahead on a same lane.

10. The ACE heavy duty truck according to any of Claims 5-7, further comprising a vehicle control unit (VCU), configured for performing, via data bus of the ACE heavy duty truck, dynamic real-time control on at least one of: the generator set, the ePSD, the automatic transmission, the at least one power battery pack, and the at least one driving motor, based on the distance and the relative speed detected by the sensor, the three-dimensional information of the road section where the ACE heavy duty truck runs contained in the map unit, state of charge (SoC) of the at least one power battery pack, and system configuration and operating parameters of the ACE heavy duty truck, so as to achieve regenerative braking energy recovery and emergency brake assist, predictive adaptive cruise, or retard for a long slope.

11. The ACE heavy duty truck according to Claim 10, wherein the VCU is further configured for calculating and setting at least one of a first early warning distance, a second warning distance and a third dangerous distance dynamically, based on the system configuration and dynamic driving data of the ACE heavy duty truck, the 3D information of the current road section, and/or the three-dimensional road information based on the electronic horizon of the map unit.

12. The ACE heavy duty truck according to Claim 11, wherein the VCU is further configured for

- when the detected distance is greater than the first early warning distance, enabling a corresponding predictive adaptive cruise mode and fuel saving algorithm in response to a driver's desire , and performing dynamic real-time control on the SoC of the at least one battery pack, system state and operating parameters of the ACE heavy duty truck, the generator set, the ePSD, the automatic transmission, and the at least one driving motor, so as to keep the speed of the ACE heavy duty truck within a specified speed range, wherein the three-dimensional information of the driving route of the ACE heavy duty truck is stored in the mapunit ;
- when the detected distance is smaller than the first early warning distance and the relative speed is greater than zero, reducing the output electric power of the generator set to zero;
- when the detected distance is smaller than the second early warning distance and the relative speed is greater than zero, gradually reducing the output power of the at least one driving motor, and after the output driving power of the at least one driving motor is reduced to zero, starting to gradually increase the regenerative braking power, so as to achieve braking and deceleration of the ACE heavy duty truck and giving a first alerting signal to the driver, wherein the second warning distance is less than the first early warning distance; and
- when the detected distance is smaller than the third dangerous distance and the relative speed is greater than zero, increasing the regenerative braking power of the driving motor to a peak value and enabling a mechanical braking system of the ACE heavy duty truck, so as to further reduce the speed of the ACE heavy duty truck, and giving a second alerting signal to the driver, the second alerting signal is different from the first alerting signal, wherein the third dangerous distance is smaller than the second warning distance.

13. The ACE heavy duty truck according to Claim 10, wherein the VCU is further configured for in the case that the ACE heavy duty truck is going down a long slope, which requires a long-time regenerative braking to achieve retarder function:
when the SoC of the at least one power battery pack is less than a first threshold, switching the three-terminal soft switch to a first position, at which an electric connection of the at least one driving motor to the at least one power battery pack through the ePSD is set up, so as to charge the at least one power battery pack using the electric energy recovered by the ACE heavy duty truck through regenerative braking.

14. The ACE heavy duty truck according to Claim 13, wherein the VCU is further configured for when the SoC is greater than or equal to the first threshold, switching the three-terminal soft switch to a second position, at which the electric connection of the at least one driving motor to the at least one power battery pack is cut off, and an electric connection of the at least one driving motor to the brake resistor through the ePSD is set up, so that the brake resistor functions as an effective load of regenerative braking and power generation to achieve a retarder function stably and reliably.

15. A computer program product, tangibly stored on a vehicle control unit (VCU) of the ACE heavy duty truck according to any of Claims 5-14, and comprising machine-executable instructions, which, when executed, enable the VCU to:

receive and locally store the system configuration parameters and dynamic operating data related to the ACE heavy duty truck;

automatically annotate and assemble a collection of the dynamic operating data of the ACE heavy duty truck with a unique time sequence, based on accurate time service of the satellite navigator of the ACE heavy duty truck, to form a dedicated structured data set; and

instruct a wireless communication unit of the ACE heavy duty truck to upload the structured data set to a cloud platform for storage for subsequent data processing;

wherein the operating data at least comprises

unique dynamic DC voltage and a plurality of dynamic DC currents from the DC bus junction of the ePSD; and real-time longitude, real-time latitude and real-time road longitudinal grade from the satellite navigator.

16. The computer program product according to Claim 15, wherein the operating data further comprises

the longitude, the latitude and the road longitudinal grade from the map unit of the ACE heavy duty truck; and the configuration parameters and the dynamic operating data from the generator set, the at least one power battery pack, the automatic transmission, the at least one driving motor and the brake resistor.

17. A predictive adaptive cruise control method for use in the ACE heavy duty truck according to any of Claims 5-14, comprising

detecting in real time the real-time longitude, real-time latitude and real-time road longitudinal grade of the road section on which the ACE heavy duty truck runs;

detecting in real time the distance and relative speed between the ACE heavy duty truck and another vehicle immediately ahead on the same lane;

calculating and setting at least one of a first early warning distance, a second warning distance and a third dangerous distance dynamically through the VCU, based on system configuration parameters and dynamic driving data of the ACE heavy duty truck, the 3D information of the current road section, and/or three-dimensional road information based on the electronic horizon of the map unit; and

when the detected distance is greater than the first early warning distance, performing, by the VCU, a dynamic real-time control on the SoC of the at least one power battery pack, the operating condition of the ACE heavy duty truck, the generator set, the ePSD, the automatic transmission and the at least one driving motor, to keep the speed of the ACE heavy duty truck within a specified speed range and automatically optimize the fuel consumption of the ACE heavy duty truck, wherein the 3D road information of the driving route of the ACE heavy duty truck is stored in the map unit.

18. The predictive adaptive cruise method according to Claim 17, further comprising in the case that the ACE heavy duty truck is going down a long slope, which requires long-time regenerative braking to achieve the retarder function:

when the SoC of the at least one power battery pack is less than the first threshold, switching the three-terminal soft switch to a first position, at which the electric connection of the at least one driving motor to the at least one power battery pack via the ePSD is set up to charge the at least one power battery pack with the electric energy generated by the ACE heavy duty truck via regenerative braking; and

when the SoC is greater than or equal to the first threshold, switching the three-terminal soft switch to a second position, at which the electric connection of the at least one driving motor to the at least one power battery pack is cut off, and an electric connection of the at least one driving motor to the brake resistor through the ePSD is set up, so that the brake resistor funcitons as an effective load of regenerative braking and power generation, so as to achieve the retarder function stably and reliably.

19. A predictive adaptive cruise method based on a cloud computing platform and used for an Automated-Connected-Electrified (ACE) heavy duty truck, comprising

generating a dedicated machine learning algorithm, based on structured big data stored on the cloud computing platform and formed by a collection of dedicated structured data sets provided by a plurality of ACE heavy duty trucks, wherein each ACE heavy duty truck of the plurality of ACE heavy duty trucks comprises a vehicle control unit (VCU) on which the computer program product according to Claim 15 or 16 is stored;

performing fuel saving control training to an AI controller by using computing capability of the cloud computing platform based on the dedicated machine learning algorithm and the structured big data;

in response to an automatic control request from any of the plurality of ACE heavy duty trucks, deriving, by the AI controller, a default control solution for optimal fuel saving customized for the ACE heavy duty truck according to the system configuration of the ACE heavy duty truck, the three-dimensional information of the driving route, and weather forecast of the day; and

wirelessly transmitting the default control solution from the AI controller to the ACE heavy duty truck, and adjusting, by the VCU, the default control solution locally and dynamically, according to actual road condition and weather condition, so as to automatically and consistently achieve an optimal fuel saving of the ACE heavy duty truck.

Figure 1

Figure 2

Figure 3

## INTERNATIONAL SEARCH REPORT

| International application No. |
|---|
| **PCT/CN2019/129964** |

**A.    CLASSIFICATION OF SUBJECT MATTER**

B60L 7/18(2006.01)i;  B60W 20/12(2016.01)i;  B60W 20/14(2016.01)i

According to International Patent Classification (IPC) or to both national classification and IPC

**B.    FIELDS SEARCHED**

Minimum documentation searched (classification system followed by classification symbols)

B60L; B60W

Documentation searched other than minimum documentation to the extent that such documents are included in the fields searched

Electronic data base consulted during the international search (name of data base and, where practicable, search terms used)

CNABS, CNKI: 卡车, 重型, epsd, 电, 功率, 分流, 发电机, 电池; VEN: truck, lorry, electrical, power, split, battery

**C.    DOCUMENTS CONSIDERED TO BE RELEVANT**

| Category* | Citation of document, with indication, where appropriate, of the relevant passages | Relevant to claim No. |
|---|---|---|
| PX | CN 109823188 A (GANTAN INTERNATIONAL COMPANY et al.) 31 May 2019 (2019-05-31)<br>    description, paragraphs 7-142, figures 1-3 | 1-19 |
| X | CN 108973979 A (GANTAN INTERNATIONAL COMPANY et al.) 11 December 2018 (2018-12-11)<br>    description, paragraphs 8-124, figures 1-4 | 1-14 |
| A | CN 101743140 A (RENAULT TRUCKS) 16 June 2010 (2010-06-16)<br>    entire document | 1-19 |
| A | CN 102957188 A (GENERAL ELECTRIC CO.) 06 March 2013 (2013-03-06)<br>    entire document | 1-19 |
| A | US 2015183328 A1 (GENERAL ELECTRIC COMPANY) 02 July 2015 (2015-07-02)<br>    entire document | 1-19 |
| A | US 2013106195 A1 (KUSCH RUEDIGER SOEREN et al.) 02 May 2013 (2013-05-02)<br>    entire document | 1-19 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 March 2020** | **31 March 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

| | | INTERNATIONAL SEARCH REPORT<br>Information on patent family members | | | International application No.<br>**PCT/CN2019/129964** | | |
|---|---|---|---|---|---|---|---|

| Patent document<br>cited in search report | | | Publication date<br>(day/month/year) | Patent family member(s) | | | Publication date<br>(day/month/year) |
|---|---|---|---|---|---|---|---|
| CN | 109823188 | A | 31 May 2019 | None | | | |
| CN | 108973979 | A | 11 December 2018 | WO | 2020015762 | A1 | 23 January 2020 |
| CN | 101743140 | A | 16 June 2010 | WO | 2009010819 | A1 | 22 January 2009 |
| | | | | JP | 2010533620 | A | 28 October 2010 |
| | | | | EP | 2170642 | A1 | 07 April 2010 |
| | | | | US | 2010184549 | A1 | 22 July 2010 |
| CN | 102957188 | A | 06 March 2013 | JP | 2013048547 | A | 07 March 2013 |
| | | | | EP | 2562030 | A2 | 27 February 2013 |
| | | | | US | 2013049684 | A1 | 28 February 2013 |
| | | | | BR | 102012020586 | A2 | 18 August 2015 |
| US | 2015183328 | A1 | 02 July 2015 | JP | 2013243914 | A | 05 December 2013 |
| | | | | US | 2018022221 | A1 | 25 January 2018 |
| | | | | CN | 103419669 | A | 04 December 2013 |
| | | | | US | 2018022222 | A1 | 25 January 2018 |
| | | | | US | 2013307489 | A1 | 21 November 2013 |
| | | | | US | 2018354373 | A1 | 13 December 2018 |
| | | | | CN | 106926718 | A | 07 July 2017 |
| US | 2013106195 | A1 | 02 May 2013 | JP | 2013099247 | A | 20 May 2013 |

Form PCT/ISA/210 (patent family annex) (January 2015)

**REFERENCES CITED IN THE DESCRIPTION**

**Non-patent literature cited in the description**

- **RICARDO.** Heavy Duty Vehicle Technology Potential and Cost Study. *Final Report for ICCT for details,* 2017